# EUROPÄISCHE PATENTSCHRIFT

(11) **EP 1 136 970 B1**
(45) Veröffentlichungstag und Bekanntmachung des Hinweises auf die Patenterteilung: **11.08.2004**
(21) Anmeldenummer: 99954551.0
(22) Anmeldetag: 23.07.1999
(51) Int. Cl.: G09B 23/28, G09B 23/32

(54) **Übungsgerät zur Ausbildung einer Person in Nothilfemassnahmen in einer Notfallsituation**
TRAINING DEVICE FOR TEACHING EMERGENCY HELP TECHNIQUES FOR A PERSON IN AN EMERGENCY SITUATION
SYSTEME D'ENTRAINEMENT SERVANT A ENSEIGNER DES MESURES D'AIDE D'URGENCE POUR UNE PERSONNE DANS UNE SITUATION D'URGENCE

(30) Priorität: 27.07.1998 RU 98114969
(43) Veröffentlichungstag der Anmeldung: 26.09.2001
(73) Patentinhaber: Lutaenko, Vyacheslav Fedorovich, Irkutsk, 664047 (RU)
(72) Erfinder: LUTAENKO, Vyacheslav Fedorovich, Irkutsk, 664047 (RU); KAZIMIROV, Jury Borisovich, Irkutsk, 664047 (RU); KOBAKOV, Jury Alexeevich, Irkutsk, 664047 (RU)
(74) Vertreter: Springstubbe, Wolf, Dipl.-Ing.
(86) Internationale Anmeldenummer: PCT/RU1999/000252
(87) Internationale Veröffentlichungsnummer: WO 2000/008619

(56) Entgegenhaltungen:
- EP-A- 0 499 744
- WO-A-92/20054
- WO-A1-87/03407
- WO-A1-92/20054
- RU-A- 93 046 929
- RU-A1- 94 044 481
- SU-A1- 1 636 854
- US-A- 4 360 345
- US-A- 4 850 876

## Beschreibung

Die Erfindung betrifft das Gebiet der Medizin, und zwar Übungsvorrichtungen zur Ausbildung in Notfallhilfemaßnahmen für Menschen mit traumatischen Verletzungen und plötzlichem Aussetzen von Herztätigkeit und Atmung auf Grund schwerer Verletzungen wie industrielle und häusliche Verletzungen, Stromverletzungen, Verkehrsunfälle, Wasserunfälle, Messerund Schusswunden, Erkrankungen, Vergiftungen usw..

### Bisheriger Stand der Technik

Zur Zeit ist eine Situation entstanden, in der der Fortschritt in aller Welt unaufhaltbar zu einem Anstieg lebensbedrohlicher Situationen führt. Die Analyse zeigt, dass 60 % der Menschen, die sich in extremen Situationen befanden, aber durch rechtzeitige Hilfe hätten gerettet werden können, wegen deren Fehlen sterben. Wie perfekt auch die Erste Hilfe in der Gegenwart und in der Zukunft sein mag, bei schweren traumatischen Verletzungen, äußeren Blutungen, einem plötzlichen Stillstand des Blutkreislaufs und Atmens kommt sie zu spät. Nur 3-5 Minuten trennen den reversiblen Zustand, den klinischen Tod, von irreversiblen Hirnschäden und und für den biologischen Tod typischen Schäden anderer lebenswichtiger menschlicher Organe. Man kann daher wirkliche Hilfe nur von Leuten erwarten, die sich zufällig in der Nähe des Verletzten befinden und Elementarkenntnisse und -fähigkeiten in moderner Notfall- und traumatologischer Hilfe besitzen. Die Praxis hat gezeigt, dass eine Ausbildung nur zusammen mit der Benutzung spezieller Übungsvorrichtungen wirksam wird und es erlaubt, den Auszubildenden das notwendige theoretische Wissen zu geben und die praktischen Fähigkeiten bei der Durchführung konkreter Maßnahmen beizubringen, die bei der Rettung menschlichen Lebens erforderlich sind.

Bekannt ist beispielsweise ein "Kompaktes interaktives Ausbildungssystem mit einer Puppe" (siehe US-Patent 4 932 879), das eine den Brustkorb eines Menschen nachbildende Vorrichtung und eine Anzeigevorrichtung zur Kontrolle der richtigen Stellung der Hände eines Reanimators bei der Durchführung einer äußeren Herzmassage aufweist. Es gibt uns jedoch keinerlei Möglichkeit, Techniken der künstlichen Beatmung zu üben. Bekannt ist auch ein "Anatomisches Modell eines Menschen zur Ausbildung in Maßnahmen der künstlichen Beatmung" (siehe JP 3-30871). Dieses Modell weist einen beweglichen Brustkorb mit einem innen angeordneten elastischen Sack und mit einer Vorrichtung für eine Tonsignalgebung auf. Die Möglichkeiten dieses Modells sind begrenzt, weil daran nur das Üben der Maßnahme der künstlichen Beatmung möglich ist.

Allgemein bekannt ist eine Übungsvorrichtung für die Ausbildung in Maßnahmen der künstlichen Beatmung und äußeren Herzmassage (siehe Werbeprospekt der Firma Ambu, Dänemark, 1992), die eine menschliche Puppe mit oberen und unteren Extremitäten und eine direkt auf dem Rumpf der Puppe angebrachte und an einen Microcomputer angeschlossene Kontrolleinrichtung mit einem Rasterdisplay aufweist. Die Puppe weist ein Brustkorbmodell mit einer elastischen Oberfläche auf. Der Kopf der Puppe enthält auswechselbare Nase-Mund-Masken und elastische Säcke zum Schutz der Auszubildenden vor gegenseitiger Ansteckung. In der Puppe sind im Bereich der Kopf- und Unterarmschlagadern auch ein Pulsimitator und Fühler der richtigen Stellung der Hände eines Reanimators und der Tiefe der Thoraxkompression bei einer äußeren Herzmassage angeordnet. Im Inneren der Puppe sind elastische Behälter vorgesehen, mit deren Hilfe das Füllen der "Lungen" und des "Bauchs" mit Luft nachgebildet wird. Die genannten Behälter werden mittels einer Luftleitung mit dem Nasen-Rachen-Raum des Kopfes verbunden. Die Übungsvorrichtung stellt eine moderne Ausbildungsvorrichtung dar und gewährleistet die Kontrolle der erforderlichen Reanimationskriterien. Allerdings erlauben die konstruktiven Besonderheiten der Puppe nicht die Durchführung des ganzen Komplexes von Notfallhilfemaßnahmen. Es ist beispielsweise nicht möglich, mit der Puppe Programme einer traumatologischen Soforthilfe bei äußeren Blutungen, einem Pneumothorax, Brüchen usw. zu realisieren. Die Übungsvorrichtung erlaubt es auch keiner grossen Zuhörerschaft, aktiv am Ausbildungsvorgang teilzunehmen und funktionierende Modelle lebenswichtiger innerer Organe des Menschen zu beobachten. Das Fehlen der Möglichkeit, ein komplexes Bild der sich mit den Handlungen eines mit der Puppe arbeitenden Auszubildenden entsprechend ändernden inneren Organe zu beobachten, erlaubt es den Auszubildenden nicht, das pathophysiologische Bild der Endzustände eines Menschen zu begreifen, und auch die Ausbildungssituation bei traumatischen Blutungen und Pneumothorax weitestgehend nachzubilden. Außerdem berücksichtigt die Art des Schutzes der Auszubildenden vor gegenseitiger Ansteckung nicht das Auftreten von Infektionen in der Puppe, bei einem Reissen des auswechselbaren elastischen Sacks, und erfordert auch die Komplettierung der Übungsvorrichtung mit einer beträchtlichen Anzahl von auswechselbaren Nase-Mund-Masken und Säcken und bei ihrem Austausch viel Zeit auf Kosten des Ausbildungsvorganges. Ferner verzerrt die Anordnung der Kontrolleinrichtung für den Ausbildungsvorgang auf der Puppe die äußere Anatomie und stört die Durchführung von Maßnahmen, die eine Druckausübung auf den Oberbauchbereich erfordern.

Bekannt ist ein medizinisches Ausbildungssystem, das ein computergesteuertes, interaktives System für eine individuelle Ausbildung darstellt und, mit dem Computer verbunden, eine menschliche Puppe, eine Signalspeichervorrichtung und Informationswiedergabedisplays aufweist (siehe US-Patent 4,360,345). Das genannte System ermöglicht eine Veranschaulichung der Ausbildung und erlaubt es mit Hilfe von Standardmethoden, die Auszubildenden zu prüfen und unter Benutzung von Computergraphiken, Videodisks und simulierenden Peripherieeinrichtungen anzuleiten und schult die Auszubildenden in Techniken der Wiederbelebungshilfe unter gleichzeitiger Bewertung der Richtigkeit ihrer Ausführung. Zugleich begrenzt das genannte System aber trotz Benutzung moderner Technologien stark seine Möglichkeiten und reduziert die Wirksamkeit der Ausbildung wegen der Unmöglichkeit, die praktischen Maßnahmen des Stillens gefährlicher äußerer Blutungen, die Soforthilfe bei Wirbelsäulenverletzungen, penetrierenden Schuss- und Messerverletzungen, Brüchen der unteren und oberen Extremitäten usw. zu üben. Die Möglichkeiten des Systems sind begrenzt durch eine Darstellung nur von äusseren, sichtbaren Lagen und Positionen für Wiederbelebungsmaßnahmen auf dem Bildschirm, unter Außerachtlassung der Sichtbarmachung der inneren lebenswichtigen Organe eines verletzten Menschen, die ihren Zustand entsprechend den traumatischen Einwirkungen und den Handlungen der Auszubildenden bei der Durchführung von Wiederbelebungsmaßnahmen ändern. Das System erlaubt es auch nicht, dem Auszubildenden in vollem Umfang die Besonderheiten der Zustände eines Verletzten im Falle einer Verstopfung der Atemwege durch eine Flüssigkeit und einen Fremdkörper zu zeigen und ihm das Leisten einer Soforthilfe an einem Menschen mit einem Elektrotrauma unter Einschluss von Maßnahmen der elektrischen Defibrillation beizubringen. Außerdem gibt es kein garantiertes System zum Schutz der Auszubildenden vor gegenseitiger Ansteckung beim Üben von Maßnahmen der künstlichen Beatmung.

### Offenbarung der Erfindung

Aufgabe der Erfindung ist es, eine solche Übungsvorrichtung zur Ausbildung in Maßnahmen der Notfallhilfe für den Menschen in Notfallsituationen zu schaffen, die es durch die konstruktive Ausbildung einer menschlichen Puppe und eines damit verbundenen Steuersystems für den Ausbildungsvorgang erlaubt, den Satz von in Echtzeit laufenden Ausbildungsprogrammen wesentlich zu erweitern und den Ausbildungsvorgang selbst bei maximaler Annäherung an die realen Bedingungen qualitativ zu verbessern.

Diese Aufgabe wird durch die Merkmale von Anspruch 1 gelöst. Dies erlaubt es, dass in einer Übungsvorrichtung zur Ausbildung in Erste-Hilfe-Maßnahmen in Notfallsituationen, enthaltend eine menschliche Puppe, die die folgenden beweglich miteinander verbundenen Einheiten aufweist: eine Kopfeinheit, eine Halseinheit, eine Rumpfeinheit mit oberen und unteren Extremitäten und ein mit der menschlichen Puppe verbundenes Steuersystem für den Ausbildungsvorgang, erfindungsgemäß das Steuersystem für den Ausbildungsvorgang in Form eines anatomischen Displays ausgebildet ist, das mit Videoimitatoren der lebenswichtigen inneren Organe und Videoimitatoren traumatischer Verletzungen versehen ist, die an einen Computer angeschlossen sind, während die menschliche Puppe einen Satz von Imitatoren der Funktion der genannten inneren Organe des Menschen mit Fühlern für äußere Einwirkungen auf diesen und Videoimitatoren traumatischer Verletzungen dieser Organe aufweist, die ebenfalls an den Computer angeschlossen sind.

Dies erlaubt es, den Ausbildungsvorgang mit einem hohen Grad an Zuverlässigkeit durchzuführen.

Es ist zweckmässig, die Kopfeinheit der menschlichen Puppe abtrennbar zu machen und sie mit einer Vorrichtung zum Schutz der Auszubildenden vor gegenseitiger Ansteckung in Form einer abnehmbaren austauschbaren Einheit zu versehen.

Dies ermöglicht einen vollständigen Schutz der Auszubildenden vor gegenseitiger Ansteckung bei der Übung von Maßnahmen der künstlichen Beatmung an der menschlichen Puppe und reduziert wesentlich die Zeit für eine Bearbeitung der Puppe mit einer Desinfektionslösung.

Es ist möglich, die Kopfeinheit der menschlichen Puppe mit einem Fühler für künstliche Beatmung zu versehen, der einen vormagnetisierten, beweglich in einem den Nase-Mund-Bereich mit der Atmosphäre verbindenden Rohr angebrachten Stab aufweist, und an der Stirn des Stabes einen Dauermagnet unbeweglich zu befestigen, unter diesem einen weiteren Dauermagnet anzuordnen, und dabei in den Wänden eines Stützrohrs im Nackenbereich der Kopfeinheit wenigstens einen an den Computer angeschlossenen und mit dem an der Stirn des Stabes befestigten Dauermagneten operativ zusammenwirkenden magnetbetätigten Kontakt anzubringen.

Ein solcher Aufbau erlaubt es, mit Hilfe von elektromagnetischen Vorgängen die spontane und erzwungene Atmung eines Menschen auf der Puppe nachzubilden, und bringt die Möglichkeit mit sich, Maßnahmen der künstlichen Beatmung auf der Puppe mit hoher Wirksamkeit unter adäquater visueller Kontrolle der Vorgänge zu üben.

Es ist zweckmäßig, die Kopfeinheit der menschlichen Puppe mit einem Mechanismus zum Ausklappen des Unterkiefers zu versehen, der einen in der Kopfeinheit auf dem Frontalpaneel, gegenüber einer im Paneel des unbeweglichen Teils der Maske ausgebildeten Öffnung unbeweglich angeordneten und an das Steuersystem für den Ausbildungsvorgang angeschlossenen Elektromagnet und einen an der Stirn des Bügels fest angeordneten und mit dem genannten Elektromagnet operativ zusammenwirkenden Dauermagnet aufweist, und ferner mit einem Fühler für das Ausklappen des Unterkiefers zu versehen, der wenigstens einen, auf den ansteigenden Zweigen des Unterkiefers in der Kopfeinheit angeordneten und an den Computer angeschlossenen mechanischen Kontakt enthält.

Dies gibt die Möglichkeit, auf der Puppe die Fertigkeit der Befreiung der oberen Atemwege mittels Ausklappen des Unterkiefers unter Gewährleistung einer unabhängigen Kontrolle dieser Handlungen zu üben.

Man kann in der Kopfeinheit der Puppe Augenimitatoren anordnen, deren jeder ein Gehäuse enthält, in dem sich, eines unter dem anderen, wenigstens drei Lichtfilter unterschiedlichen Kontrasts befinden, die der Reihe nach den Augapfel, die Iris, eine weite Pupille des menschlichen Auges nachbilden, und ein undurchsichtiges, eine enge Pupille des menschlichen Auges nachbildendes Lichtfilter, hinter dem ein an den Computer angeschlossenes Ausleuchtelement angeordnet ist.

Dies gibt die Möglichkeit, den Zustand eines "Verletzten" anhand der geometrischen Größe der Augenpupillen zu diagnostizieren, die sich adäquat zu den Handlungen des Reanimators ändern.

Es ist zweckmäßig, die Kopfeinheit der menschlichen Puppe mit einem Fühler für ein Zurückbiegen der Kopfeinheit zu versehen, der einen am oberen Rand der Vorderwand des Zylinders der Halseinheit unbeweglich befestigten Dauermagnet und einen magnetbetätigten Kontakt enthält, der an dem Frontalpaneel der Kopfeinheit im unteren Teil des Kinns angebracht ist, an den Computer angeschlossen ist und mit dem genannten Dauermagneten operativ zusammenwirkt.

Dies ermöglicht eine unabhängige Kontrolle der Wirksamkeit der Handlungen der Auszubildenden bei der Durchführung der Maßnahme der Befreiung der oberen Atemwege an der menschlichen Puppe durch Zurückbiegen der Kopfeinheit.

Die Halseinheit der menschlichen Puppe kann in Form eines Hohlzylinders aus festem Material ausgebildet sein, dessen Vorderwand die äußere Oberfläche des menschlichen Halses nachbildet und dessen Boden in Form einer konkaven Halbkugel ausgebildet ist, wobei der obere Rand der Rückwand des Zylinders mit dem unteren Rand des Nackens der Kopfeinheit, ein ein Gleiten der Frontfläche des Zylinders der Halseinheit am Rand der Wand der Kopfeinheit im unteren Teil des Kinns ermöglichendes Gelenk bildend, beweglich verbunden ist, so dass sich der größere Teil des Zylinders der Halseinheit bei nicht zurückgebogener Kopfeinheit im Hohlraum der Kopfeinheit befindet.

Ein solcher Aufbau der Halseinheit erlaubt es, mit weitestgehender Zuverlässigkeit den Vorgang des Zurückbiegens des Kopfes eines Menschen an der Puppe nachzubilden, der eine wesentliche Maßnahme der Ersten Hilfe darstellt.

Es ist zweckmäßig, die Halseinheit der menschlichen Puppe mit einem Fühler für eine Halsdrehung zu versehen, der einen fest am Boden des Zylinders der Halseinheit angebrachten Dauermagnet und einen magnetbetätigten Kontakt enthält, der an der Rumpfeinheit gegenüber dem genannten Dauermagnet angebracht und an den Computer angeschlossen ist.

Dies ermöglicht eine unabhängige Kontrolle der Wirksamkeit der Handlungen der Auszubildenden an der Puppe bei der Durchführung der Maßnahme der Entfernung flüssigen Inhalts aus dem Magen-Darm-Trakt und aus den oberen Atemwegen eines Verletzten.

Die Rumpfeinheit der menschlichen Puppe kann eine feste Hülle aufweisen, innerhalb deren sich eine abnehmbare Brustkorbund Baucheinheit befindet, die eine gemeinsame Platte enthält, an der zwei miteinander gekoppelte feste Paneele gelenkig angebracht sind, unterhalb derer sich wenigstens ein elastisch verformbares Element befindet, wobei an den genannten festen Paneelen feste Frontpaneele beweglich angebracht sind, deren Relief die Oberfläche des menschlichen Brustkorbs und Bauchs nachbildet.

Eine solche Rumpfeinheit hat es erlaubt, in ihr einen kompletten Satz von Imitatoren der Lebensfunktionen des Menschen und Fühlern für äußere Einwirkungen auf ihn unterzubringen, was es erlaubt, ein breites Spektrum von Zuständen eines Verletzten an der Übungsvorrichtung nachzubilden und automatisch alle Handlungen des Auszubildenden gleichzeitig mit dessen Einwirkungen auf die Puppe zu kontrollieren.

Es ist möglich, die Brustkorb- und Baucheinheit der Rumpfeinheit mit einem Imitator von Brustkorbbewegungen und einem Imitator von Bauchbewegungen zu versehen, deren jeder einen unbeweglich an der Innenseite des entsprechenden frontalen festen, die Oberfläche von Brustkorb bzw. Bauch imitierenden Paneels befestigten Dauermagnet enthält, unterhalb dessen an dem jeweiligen festen Paneel ein entsprechender Elektromagnet unbeweglich befestigt ist, der an den Computer angeschlossen ist und operativ mit dem Dauermagnet zusammenwirkt.

Dies erlaubt es, elastische Behälter und Luftleitungen, d.h. Infektionsinkubatoren, aus der Puppe zu entfernen und mit Hilfe von elektromagnetischen Vorgängen nicht nur erzwungene Exkursionen der Oberflächen von Brustkorb bzw. Bauch, sondern auch spontane Bewegungen des Brustkorbs bei der automatischen Reanimierung der menschlichen Puppe nachzubilden.

Die abnehmbare Brustkorb- und Baucheinheit der Rumpfeinheit kann mit einem Fühler für eine äußere Herzmassage, einem Fühler für eine Magendekompression und einem Fühler für eine übermäßige Anstrengung bei der Massage versehen sein, wobei der Fühler für die äußere Herzmassage und der Fühler für die Magendekompression jeweils einen an der Innenfläche des entsprechenden festen Paneels befestigten Dauermagnet und einen entsprechenden magnetbetätigten Kontakt enthalten, der unmittelbar unterhalb des genannten jeweiligen Dauermagnets auf der gemeinsamen Platte unbeweglich befestigt ist, und der Fühler für eine übermäßige Anstrengung bei der Massage in Form eines mechanischen Kontakts ausgebildet sein kann, der auf der gemeinsamen Platte unter dem festen Paneel der Brustkorb- und Baucheinheit angebracht ist, wobei alle genannten magnetbetätigten Kontakte und der mechanische Kontakt an den Computer angeschlossen sind.

Dies erlaubt es, die Anzahl der Herzkompressionen bei einer äußeren Herzmassage automatisch zu zählen, die Stärke der aufgewandten Anstrengungen festzuhalten sowie eine Maßnahme der Magendekompression unter adäquater unabhängiger Kontrolle der Wirksamkeit der Handlungen des Auszubildenden durchzuführen.

Des Weiteren kann die Brustkorb- und Baucheinheit der Rumpfeinheit einen Satz von Fühlern für die Position der Hände des Reanimators auf der Oberfläche des Brustkorbs bei einer äußeren Herzmassage aufweisen, die mechanische Kontakte darstellen, die auf dem inneren festen Paneel unmittelbar unter dem festen Frontpaneel bzw. im Bereich des Brustkorbs, der seitlichen Rippenenden und des Schwertfortsatzes des Menschen angebracht und an den Computer angeschlossen sind.

Dies erlaubt es, die Position der Hände des Reanimators an der Puppe beim Üben der Maßnahme der äußeren Herzmassage automatisch zu kontrollieren.

Es ist möglich, die Brustkorb- und Baucheinheit der Rumpfeinheit mit einem Fühler für die Seitenlage der Puppe zu versehen, der eine Platte enthält, deren eines Ende auf einer Stirnseite der gemeinsamen Platte beweglich befestigt ist, auf deren anderem, freien Ende ein Dauermagnet fest angebracht ist, beiderseits dessen auf der gemeinsamen Platte zwei magnetbetätigte Kontakte angebracht sind, die an den Computer angeschlossen sind und abwechselnd mit dem genannten Dauermagnet zusammenwirken.

Dies ermöglicht es, die Lage der Puppe bei der Durchführung von Maßnahmen einer Befreiung der Atemwege von flüssigem Inhalt und einem Fremdkörper an ihr automatisch zu kontrollieren.

Es ist zweckmäßig, die Brustkorb- und Baucheinheit der Rumpfeinheit mit einem Fühler für einen Schlag in den Zwischen-Schulterblatt-Bereich und einem Fühler für einen Schlag in den Herzbereich zu versehen, deren jeder ein an geeigneter Stelle befestigtes Gehäuse enthält, innerhalb dessen zwei Magnete, einer unbeweglich und der andere beweglich, angeordnet sind, während an der Aussenwand des Gehäuses mindestens ein magnetbetätigter fest angebracht ist, der an den Computer angeschlossen ist und mit dem genannten Dauermagnet operativ zusammenwirkt.

Dies gibt die Möglichkeit, an der menschlichen Puppe die Maßnahme der Entfernung eines Fremdkörpers aus den oberen Atemwegen und die Maßnahme der Wiederingangsetzung der Herztätigkeit durch einen präkordialen Schlag in den Herzbereich unter Ermöglichung einer unabhängigen Kontrolle dieser Handlungen zu üben.

Es ist auch zweckmäßig, die Brustkorb- und Baucheinheit der Rumpfeinheit mit einem Modell einer Gürtelschnalle zu versehen, das einen auf der Aussenseite des die Oberfläche des menschlichen Bauchs nachbildenden Frontpaneels befestigten Körper aufweist, in dem ein Einschiebsel mit einem Lichtindikator beweglich angeordnet ist, während in der die Bewegung des Einschiebsels begrenzenden Wandung des genannten Körpers wenigstens zwei mechanische Kontakte angeordnet sind, die operativ mit dem Einschiebsel zusammenwirken, wobei der genannte Lichtindikator und die mechanischen Kontakte an den Computer angeschlossen sind.

Ein solcher Aufbau erlaubt es, die Position des die Beweglichkeit des "Bauchs" des verletzten Menschen begrenzenden Gürtels zu kontrollieren, und ermöglicht es, das gewählte Programm neu zu starten, ohne von der menschlichen Puppe wegzugehen.

Man kann die Extremitäten der menschlichen Puppe mit Fühlern für das Anlegen von Immobilisierungsschienen versehen, deren jeder wenigstens zwei mechanische Kontakte enthält, die jeweils unter in der Hülle der Puppe im Bereich von Unterarm und Oberschenkel ausgebildeten durchgehenden Öffnungen angeordnet sind und in deren jedem eine Stange beweglich angeordnet ist, die mit dem entsprechenden, an den Computer angeschlossenen Kontakt operativ zusammenwirkt.

Dies ermöglicht es, Maßnahmen des Anlegens von Immobilisierungsschienen bei Brüchen von Extremitäten unter unabhängiger Kontrolle dieser Handlungen an der Puppe zu üben.

Es ist zweckmäßig, die menschliche Puppe mit Pulsimitatoren zu versehen, deren jeder ein Gehäuse enthält, in dem ein an den Computer angeschlossener Elektromagnet und ein Dauermagnet angeordnet sind, die durch eine dämpfende Zwischenlage voneinander getrennt sind, wobei der Dauermagnet mit einer Stange fest verbunden ist, die in einer im Bereich von Kopfschlagader und Unterarmschlagader ausgebildeten durchgehenden Öffnung frei angebracht ist, während die Pulsimitatoren im Bereich von Oberarmschlagader und Oberschenkelschlagader mit geeigneten Fühlern für das Abdrücken einer Arterie kombiniert und in Form einer einzigen Einheit ausgebildet sind, die ein gemeinsames Gehäuse aufweist, in dem der Pulsimitator beweglich angeordnet ist, unterhalb dessen ein entsprechender mechanischer Kontakt vorgesehen ist, dessen einer Teil am gemeinsamen Gehäuse anliegt, während der andere Teil am Gehäuse anliegt, wobei der Kontakt selbst an den Computer angeschlossen ist.

Ein solcher Aufbau gibt die Möglichkeit, mit hoher Zuverlässigkeit spontane und erzwungene Pulsschläge in einem breiten Frequenzband an der menschlichen Puppe nachzubilden, und erlaubt es, das Diagnostizieren des Zustandes des Verletzten an Hand des Pulsschlages an der Puppe zu üben.

Man kann die menschliche Puppe mit Mechanismen der Stillung einer äußeren Blutung bei einer penetrierenden Verletzung im Bereich von Kopf, Extremitäten und Brustkorb versehen, deren jeder einen Videoimitator der äußeren Blutung aufweist, der in dem entsprechenden Teil der menschlichen Puppe angebracht und als Lichtfilter in Form eines Blutflecks ausgebildet ist, unter dem ein Ausleuchtelement angeordnet ist, mit Fühlern für das Anlegen eines Druckverbandes oder einer Abbindung an eine "Wunde", deren jeder mit dem entsprechenden Imitator kombiniert und in Form von mechanischen Kontakten ausgebildet ist, und mit ebenfalls in Form von mechanischen Kontakten ausgebildeten Fühlern für das Abdrücken der entsprechenden blutenden Schlagadern, die entsprechend den medizinischen Forderungen an diesen Schlagadern angeordnet sind, wobei alle genannten Videoimitatoren und Fühler an den Computer angeschlossen sind.

Ein solcher Aufbau erlaubt es, an der menschlichen Puppe sichtbare lebensgefährliche äußere Blutungen als Ergebnis penetrierender Verletzungen nachzubilden und Maßnahmen der Stillung dieser Blutungen unter unabhängiger Kontrolle der Handlungen des Auszubildenden an der Puppe zu üben.

Es ist zweckmäßig, das Steuersystem für den Ausbildungsvorgang mit einem an den Computer angeschlossenen und einen Videoimitator für Elektrokardiogrammkurven sowie abnehmbare Elektroden enthaltenden elektrischen Übungsdefibrillator zu versehen, die auf ihrer Vorderseite jeweils wenigstens einen magnetbetätigten Kontakt aufweisen, der operativ mit einem auf der Innenseite des Frontpaneels der Brustkorb- und Baucheinheit im Herzbereich angebrachten Dauermagnet zusammenwirkt, während in den Handgriff der abnehmbaren Elektrode wenigstens ein mechanischer Kontakt eingebaut ist.

Dies ermöglicht es, den Zustand des "Verletzten" an Hand der Elektrokardiogrammkurven zu diagnostizieren sowie die Herztätigkeit mittels der Maßnahme der elektrischen Defibrillation wieder in Gang zu setzen.

Das anatomische Display des Steuersystems für den Ausbildungsvorgang kann ein Reliefpaneel mit Umrisse menschlicher innerer Organe und Bereiche traumatischer Verletzungen nachbildenden Feldern aufweisen, in denen an den Computer angeschlossene Ausleuchtelemente und ein über dem genannten Reliefpaneel angeordnetes Diapositiv mit der Darstellung des Skeletts, von inneren Organen sowie von Blutflecken bei äußeren Blutungen und Verletzungen der Wirbelsäule angebracht sind, das von oben mit einem halbdurchsichtigen Schirm abgedeckt ist, unter welchem unmittelbar ein Anzeiger für die Kontrollzeit von Ausbildungsprogrammen auf dem genannten Reliefpaneel angebracht ist, der ebenfalls an den Computer angeschlossen ist.

Ein solcher Aufbau erlaubt es, lebenswichtige innere Organe des Menschen und traumatische Verletzungen derselben nicht nur statisch, sondern auch dynamisch nachzubilden, wobei die inneren Organe ihren Zustand adäquat zu den an der menschlichen Puppe nachgebildeten Merkmalen der Lebensfunktionen und zu den Einwirkungen des Auszubildenden ändern, und eine sichtbare Kontrolle der Wirksamkeit der Handlungen des Auszubildenden in Echtzeit zu gewährleisten.

Die menschliche Puppe kann zusätzlich mit einem Imitator der Trennung des Menschen vom elektrischen Netz bei einer Verletzung durch elektrischen Strom versehen sein, der, an den Computer angeschlossen, einen mechanischen Kontakt und einen darüber angeordneten Lichtindikator enthält, während im anatomischen Display auf dem Reliefpaneel zusätzlich Videoimitatoren des Weges des durch die menschliche Puppe fliessenden Stroms angeordnet sind, die ebenfalls an den Computer angeschlossen sind.

Dies ermöglicht es, die Besonderheiten eines Elektrotraumas tiefer zu verstehen und zu vermitteln, wie man den Verletzten von der Berührung mit stromführenden Teilen einer Anlage befreit, ohne sich selbst einem Risiko auszusetzen.

### Kurze Beschreibung der Zeichnungen

Nachfolgend wird die Erfindung anhand der Beschreibung konkreter Ausführungsmaßnahmen und der beigefügten Zeichnungen näher erläutert. Darin zeigen:
- Fig. 1: eine Gesamtansicht einer Übungsvorrichtung gemäß der Erfindung;
- Fig. 2: ein Funktionsschaltbild einer Übungsvorrichtung gemäß der Erfindung;
- Fig. 3: einen Segmentschnitt einer Kopfeinheit einer menschlichen Puppe gemäß der Erfindung;
- Fig. 4: eine Kopfeinheit der menschlichen Puppe mit einer aufgeschobenen Vorrichtung zum Schutz der Auszubildenden vor wechselseitigen Ansteckung gemäß der Erfindung;
- Fig. 5: einen Längsschnitt einer Rumpfeinheit der menschlichen Puppe gemäß der Erfindung;
- Fig. 6: einen Aufbau eines Fühlers für einen Schlag in den Zwischen-Schulterblatt-Bereich und in den Herzbereich gemäß der Erfindung;
- Fig. 7: einen Aufbau eines Modells einer Gürtelschnalle gemäß der Erfindung;
- Fig. 8: eine menschliche Puppe und eine Topographie von in ihr angeordneten Imitatoren von Lebensfunktionen, traumatischen Verletzungen und Fühlern für äußere Einwirkungen gemäß der Erfindung;
- Fig. 9: einen Aufbau eines mit einem Fühler für das Abdrücken einer Arterie kombinierten Pulsimitators gemäß der Erfindung;
- Fig. 10: eine abnehmbare Elektrode eines elektrischen Defibrillators gemäß der Erfindung;
- Fig. 11: einen Aufbau eines anatomischen Displays gemäß der Erfindung.

### Beste Variante einer Ausbildung der Erfindung

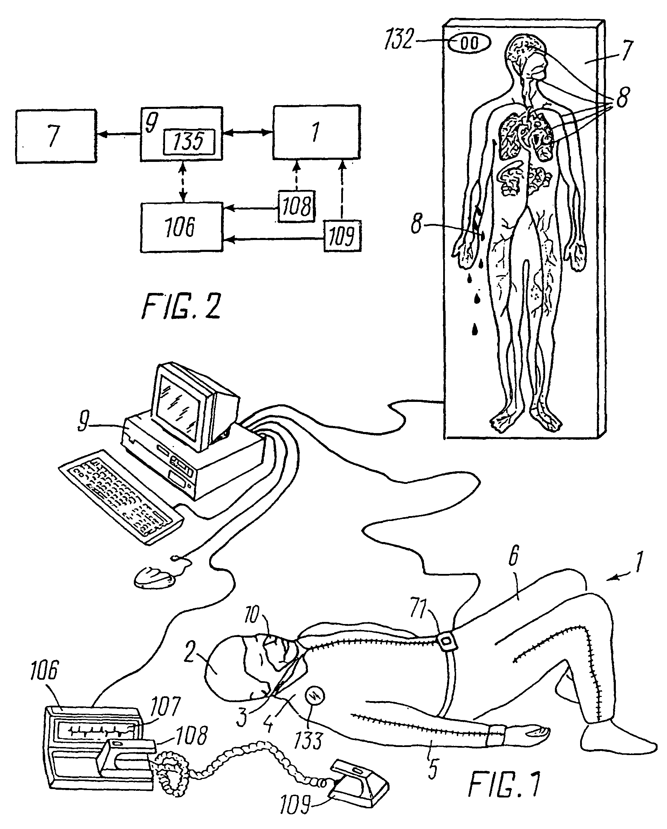

Die vorliegende Übungsvorrichtung zur Ausbildung in Erste-Hilfe-Maßnahmen für einen Menschen in Notfallsituationen weist eine menschliche Puppe (Fig. 1) auf, die aus beweglich miteinander verbundenen: Kopfeinheit 2, Halseinheit 3, Rumpfeinheit 4 mit oberen 5 und unteren Extremitäten 6 lebensgroß ausgebildet werden kann. Die menschliche Puppe 1 bildet die äußeren Merkmale der plastischen Anatomie des Menschen nach, die einer visuellen und taktilen Kontrolle zugänglich sind.

Die menschliche Puppe 1 ist an ein Steuersystem für den Ausbildungsvorgang angeschlossen, das Situationen der Ausbildungsprogramme nachbildet und eine unabhängige Kontrolle der Wirksamkeit der Handlungen des Auszubildenden beim Üben von praktischen Maßnahmen der Rettung menschlichen Lebens an der menschlichen Puppe 1 durchführt. Das Steuersystem für den Ausbildungsvorgang ist als ein anatomisches Display 7 ausgebildet, das mit einem Satz 8 von Videoimitatoren lebenswichtiger innerer Organe des Menschen und Videoimitatoren von traumatischen Verletzungen dieser Organe versehen ist, die an einen Computer 9 (Fig. 2) angeschlossen sind. Innerhalb der menschlichen Puppe 1 (Fig. 1) sind Imitatoren von Lebensfunktionen der inneren Organe des Menschen mit Fühlern für äußere Einwirkungen auf sie untergebracht, die ebenfalls an den Computer 9 angeschlossen sind. In Fig. 1 sind die in der menschlichen Puppe 1 angeordneten Imitatoren und Fühler nicht dargestellt.

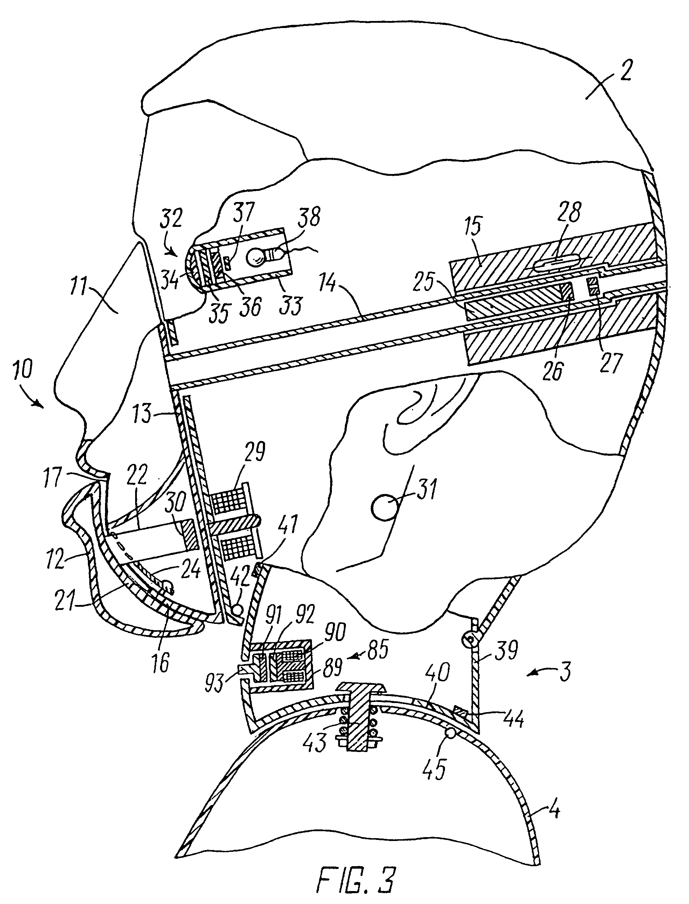

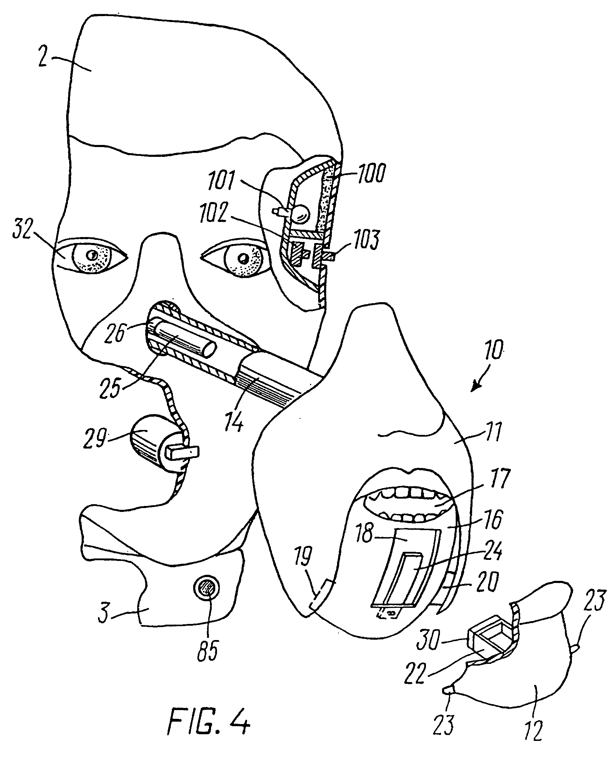

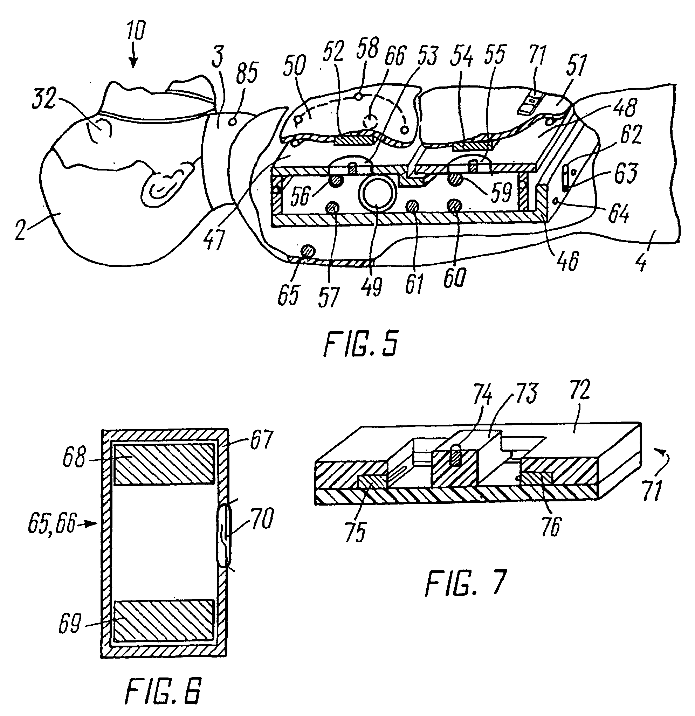

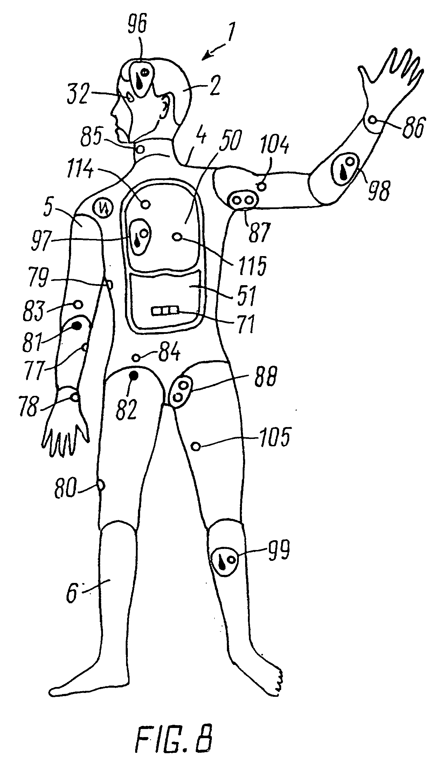

Die Kopfeinheit 2 (Fig. 3) ist hohl ausgebildet, und in ihr ist eine auswechselbare Vorrichtung 10 zum Schutz der Auszubildenden vor gegenseitiger Ansteckung beim Üben von Maßnahmen der künstlichen Beatmung der Lungen eines Menschen an der menschlichen Puppe 1 untergebracht. Die abnehmbare auswechselbare Vorrichtung 10 zum Schutz der Auszubildenden vor gegenseitiger Ansteckung (Fig. 3, 4) weist eine feste Maske mit einem unbeweglichen Teil 11 und einem beweglichen Teil 12 auf. Der unbewegliche Teil 11 der Maske weist eine Rückwand 13 auf, in der ein Rohr 14 fest angebracht ist. Im Nackenbereich der Kopfeinheit 2 ist ein weiteres, Stützrohr 15 unbeweglich angeordnet, das mit der Atmosphäre in Verbindung steht. Das freie Ende des Rohrs 14 ist in dem genannten Stützrohr 15 angebracht, und es steht ebenfalls mit der Atmosphäre in Verbindung. Der unbewegliche Teil 11 der festen Maske bildet Nase und Oberlippe eines Menschen nach, unter denen eine konvexe Vorderwand 16 angeordnet ist. In der konvexen Vorderwand 16 ist eine Öffnung 17 ausgebildet, die den geöffneten Mund des Menschen nachbildet, und unmittelbar darunter ist eine weitere Öffnung 18 ausgebildet. An den Rändern der konvexen Wand 16 im unbeweglichen Teils 11 der festen Maske sind Führungsaussparungen 19, 20 ausgebildet. Der bewegliche Teil 12 der festen Maske bildet Unterlippe und Kinn des Menschen nach. Die innere Wand 21 des beweglichen Teil 12 der festen Maske ist in Form einer konkaven Halbkugel ausgebildet. In der Mitte der inneren Wand 21 ist ein Π-förmiger Bügel 22 befestigt. An den Rändern der inneren Wand 21 des beweglichen Teil 12 der festen Maske sind Stifte 23 angebracht. Der Durchmesser dieser Stifte entspricht der Weite der Aussparungen 19, 20, die an den Rändern der konvexen Wand 16 des unbeweglichen Teils 11 der festen Maske ausgebildet sind.

Innerhalb des genannten Π-förmigen Bügels 22 ist eine Platte 24 aus einem festen Material befestigt. Mit Hilfe der genannten Platte 24 und der Stifte 23 wird der bewegliche Teil 12 der Maske, der mit deren unbeweglichen Teil 11 gekoppelt ist, frei gehalten. Der bewegliche Teil 12 der Maske hat die Möglichkeit, sich nach vorne herauszuschieben und über die Oberfläche der konvexen Halbkugel 16 der unbeweglichen Teil 11 der Maske nach unten zu gleiten.

Die Kopfeinheit 2 der menschlichen Puppe ist mit einem Fühler für künstliche Beatmung versehen, der einen vormagnetisierten Stab 25 aufweist. An einem Ende des Stabes 25 ist ein Dauermagnet 26 befestigt. Der Stab 25 ist frei in dem Rohr 14 angebracht und wird vom einem weiteren Dauermagnet 27 vormagnetisiert, der unterhalb des Dauermagnets 26 des Stabes 25 fest angeordnet ist, während in der Wand des Stützrohrs 15 ein magnetbetätigter Kontakt 28 angeordnet ist, der an den Computer 9 (Fig. 1) angeschlossen ist und mit dem Dauermagnet 26 (Fig. 3) operativ zusammenwirkt. In der Kopfeinheit 2 (Fig. 1) der menschlichen Puppe 1 ist ein Mechanismus zum Ausklappen des Unterkiefers installiert. Der Mechanismus zum Ausklappen des Unterkiefers umfasst einen Elektromagnet 29 (Fig. 3, 4), der in der Kopfeinheit 2 gegenüber der Öffnung 18 fest angegeordnet ist, und einen an der Stirn des Bügels 22 fest angebrachten und mit dem Elektromagnet 29 operativ zusammenwirkenden Dauermagnet 30. Im Bereich der ansteigenden Zweige des Unterkiefers ist in der Wand der Kopfeinheit 2 ein mechanischer Kontakt 31 eines Fühlers für das Ausklappen des Unterkiefers angeordnet. Der genannte Elektromagnet 29 und der mechanische Kontakt 31 sind an den Computer 9 angeschlossen (Fig. 1). Die Kopfeinheit 2 ist mit Augenimitatoren 32 versehen, deren jeder ein Gehäuse 33 enthält, in dem sich ein Satz von untereinander angeordneten Lichtfiltern unterschiedlichen Kontrasts befindet: ein den Augapfel nachbildendes Lichtfilter 34, ein die Iris nachbildendes Lichtfilter 35, ein eine weite Pupille des menschlichen Auges nachbildendes Lichtfilter 36 und ein undurchsichtiges, eine enge Pupille des menschlichen Auges nachbildendes Lichtfilter 37, unter dem ein an den Computer 9 angeschlossenes Ausleuchtelement 38 (Fig. 1) installiert ist.

Die Halseinheit 3 (Fig. 3) ist aus festem Kunststoff gebildet und stellt einen Hohlzylinder 39 dar, dessen Vorderwand die äußere Oberfläche des menschlichen Halses nachbildet und dessen Boden 40 in Form einer konkaven Halbkugel ausgebildet ist. Der obere Rand der Rückwand des Zylinders 39 ist mit dem unteren Rand des Nackens der Kopfeinheit 2 gelenkig verbunden. Die Gelenkverbindung erlaubt ein freies Gleiten der Frontfläche des Zylinders 39 der Halseinheit 3 am Rand der Wand der Kopfeinheit 2 bei einem Zurückbiegen, während bei nicht zurückgebogener Kopfeinheit 2 der größere Teil des Zylinders 39 der Halseinheit 3 sich im Hohlraum der Kopfeinheit 2 befindet. Die beweglich miteinander verbundenen Kopfeinheit 2 und Halseinheit 3 sind mit einem Fühler für ein Zurückbiegen der Kopfeinheit 2 versehen, der einen am oberen Rand der Vorderwand des Zylinders 39 der Halseinheit 3 unbeweglich befestigten Dauermagnet 41 und einen magnetbetätigten Kontakt 42 enthält, der im Bereich des Kinns der Kopfeinheit 2 unbeweglich angeordnet ist. Der magnetbetätigte Kontakt 42 ist an den Computer 9 (Fig. 1) angeschlossen und wirkt mit dem Dauermagneten 41 operativ zusammen.

Der Boden 40 (Fig. 3) des Zylinders 39 der Halseinheit 3 ist am oberen Teil der Rumpfeinheit 4 beweglich angeordnet und wird mit ihm durch einen gefederten Bolzen 43 in Verbindung gehalten. Die Baugruppe der beweglichen Verbindung der Halseinheit 3 mit der Rumpfeinheit 4 ist mit einem Fühler für eine Drehung der Halseinheit 3 versehen, der einen fest am Boden 40 des Zylinders 39 der Halseinheit 3 angebrachten Dauermagnet 44 und einen magnetbetätigten Kontakt 45 enthält, der am oberen Teil der Rumpfeinheit 4 gegenüber dem Dauermagnet 44 befestigt und an den Computer 9 (Fig. 1) angeschlossen ist. Dabei wirkt der genannte magnetbetätigte Kontakt 45 (Fig. 3) mit dem genannten Dauermagnet 44 operativ zusammen.

In der Rumpfeinheit 4 (Fig. 5) ist eine abnehmbare Brustkorbund Baucheinheit angeordnet, die eine gemeinsame Platte 46 enthält, an der zwei miteinander gekoppelte feste Paneele 47 und 48 gelenkig angebracht sind. Unter den Paneelen 47 und 48 ist ein auswechselbares, elastisch verformbares Element 49 angeordnet, das die Elastität des menschlichen Brustkorbs und des Bauchs nachbildet. An den festen Paneelen 47 und 48 sind jeweils ein das Relief der vorderen Oberfläche des menschlichen Brustkorbs nachbildendes festes Frontpaneel 50 und ein das Relief der vorderen Oberfläche des Oberbauchbereiches des Menschen nachbildendes festes Frontpaneel 51 beweglich befestigt. In der abnehmbaren Brustkorb- und Baucheinheit sind ein Imitator für Brustkorbbewegungen und ein Imitator für Bauchbewegungen angeordnet. Der Imitator für Brustkorbbewegungen enthält einen unbeweglich an der Innenseite des entsprechenden festen, die Oberfläche des Brustkorbs nachbildenden Frontpaneels 50 befestigten Dauermagnet 52 (Fig. 5), untererhalb dessen an dem entsprechenden festen Paneel 47 ein Elektromagnet 53 unbeweglich befestigt ist. Der Elektromagnet 53 ist an den Computer 9 (Fig. 1) angeschlossen und wirkt operativ mit dem Dauermagnet 52 (Fig. 5) zusammen. Der Imitator für Bauchbewegungen enthält ebenfalls einen unbeweglich an der Innenseite des entsprechenden festen, die Oberfläche des menschlichen Bauchs nachbildenden Frontpaneels 51 befestigten Dauermagnet 54. Unterhalb des Dauermagnets 54 ist an dem entsprechenden festen Paneel 48 ein an den Computer 9 (Fig. 1) angeschlossener und operativ mit dem Dauermagnet 54 (Fig. 5) zusammenwirkender Elektromagnet 55 unbeweglich befestigt. Die abnehmbare Brustkorb- und Baucheinheit ist mit einem Fühler für eine äußere Herzmassage versehen, der in Form eines an der Innenfläche des festen Paneels 47 im Herzbereich befestigten Dauermagnets 56 und eines direkt unterhalb des Dauermagnets 56 auf der gemeinsamen Platte 46 unbeweglich befestigten magnetbetätigten Kontaktes 57 ausgebildet ist. Der magnetbetätigte Kontakt 57 ist an den Computer 9 (Fig. 1) angeschlossen und wirkt mit dem genannten Dauermagnet 56 (Fig. 5) operativ zusammen. Die abnehmbare Brustkorb- und Baucheinheit enthält einen Satz von mechanischen Kontakten 58, mit deren Hilfe die Position der Hände des Auszubildenden auf der vorderen Brustkorboberfläche der Rumpfeinheit 4 bei einer äußeren Herzmassage an der Puppe 1 kontrolliert wird.

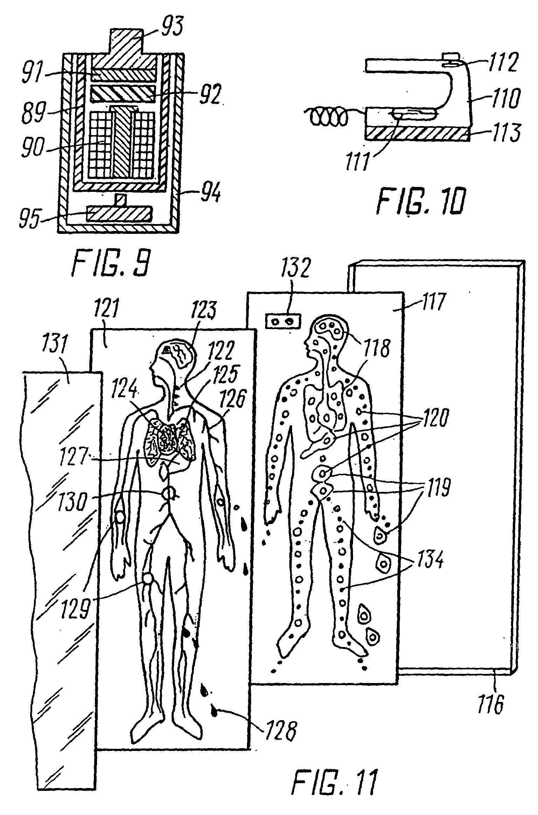

Die mechanischen Kontakte 58 (Fig. 5) sind auf dem inneren festen Paneel 47 unmittelbar vor dem Frontpaneel 50 um das "Herz" herum angeordnet und an den Computer 9 (Fig. 1) angeschlossen. Die abnehmbare Brustkorb- und Baucheinheit ist auch mit einem Fühler für eine Magendekompression versehen, der in Form eines an dem inneren festen Paneel 48 im Magenbereich befestigten Dauermagnets 59 und eines unmittelbar unter dem Dauermagnet 59 auf der gemeinsamen Platte 46 unbeweglich befestigten magnetbetätigten Kontaktes 60 ausgebildet ist. Der magnetbetätigte Kontakt 60 ist an den Computer 9 (Fig. 1) angeschlossen und wirkt mit dem genannten Dauermagnet 59 (Fig. 5) operativ zusammen. In der abnehbaren Brustkorb- und Baucheinheit ist auch ein Fühler für eine übermäßige Anstrengung bei der äußeren Herzmassage angeordnet, der einen auf der gemeinsamen Platte 46 unter dem festen Paneel 47 unbeweglich befestigten mechanischen Kontakt 61 aufweist, der an den Computer 9 (Fig. 1) angeschlossen ist und mit der inneren Fläche des genannten festen Paneels 47 (Fig. 5) operativ zusammenwirkt. In der abnehbaren Brustkorbund Baucheinheit ist im Taillenbereich ein Fühler für die Seitenlage der menschlichen Puppe 1 (Fig. 1) angeordnet, der eine Platte 62 (Fig. 5) enthält, deren eines Ende an einer Stirnseite der gemeinsamen Platte 46 frei aufgehängt ist, während auf dem anderem Ende der Platte 62 ein Dauermagnet 63 fest angebracht ist, beiderseits dessen auf der gemeinsamen Platte 46 zwei magnetbetätigte Kontakte 64 angebracht sind, die an den Computer 9 (Fig. 1) angeschlossen sind und abwechselnd mit dem genannten Dauermagnet 63 (Fig. 5) zusammenwirken. Die abnehmbare Brustkorb- und Baucheinheit ist mit einem Fühler 65 für einen Schlag in den Zwischen-Schulterblatt-Bereich und einem Fühler 66 für einen Schlag in den Herzbereich versehen, deren jeder ein Gehäuse 67 (Fig. 6) enthält, innerhalb dessen zwei Magnete 68, 69 frei untereinander angeordnet sind, während in der Außenwand des Gehäuses 67 ein magnetbetätigter Kontakt 70 befestigt ist, der an den Computer 9 (Fig. 1) angeschlossen ist und mit den Dauermagneten 68 und 69 (Fig. 6) operativ zusammenwirkt. Der Fühler 65 (Fig. 5) ist an der inneren Seite der Hülle der Rumpfeinheit 4 im Bereich zwischen den Schulterblättern fest angeordnet und der Fühler 66 an der inneren Seite des festen Frontpaneels 50 im Herzbereich. Die Brustkorb- und Baucheinheit ist auch mit einem Modell 71 einer Gürtelschnalle versehen, das einen auf der Aussenseite des das Oberflächenrelief des menschlichen Bauchs nachbildenden festen Frontpaneels 51 (Fig. 5) befestigten Körper 72 enthält. Innerhalb des Körpers 72 ist ein Einschiebsel 73 mit einem in ihm montierten Lichtindikator 74 für die Schnallenposition beweglich angeordnet. In den Seitenwänden des Körpers 72 sind zwei mechanische Kontakte 75 und 76 angeordnet. Der Kontakt 75 erlaubt einen wiederholten Start des Computerprogrammes unmittelbar von der menschlichen Puppe 1 (Fig. 1) aus, und der Kontakt 76 (Fig. 7) registriert den Zustand des Modells 71 der Gürtelschnalle (Fig. 1) als "offen".

Der Lichtindikator 74 (Fig. 7) und die Kontakte 75, 76 sind an den Computer (9) angeschlossen und wirken abwechselnd mit dem Einschiebsel 73 (Fig. 7) operativ zusammen. Die oberen Extremitäten 5 (Fig. 8) und die unteren Extremitäten 6 der Puppe 1 sind aus einem festen Kunststoff hohl in Form von beweglich miteinander verbundenen Teilen ausgebildet, die Oberarm-, Ellenbogen-, Hand-, Oberschenkel- und Unterschenkelfragmente der Arme und Beine des Menschen nachbilden. Die Extremitäten 5 und 6 sind mit Hilfe von (in den Zeichnungen nicht dargestellten) Gelenkverbindungen verbunden, wobei in ihnen an entsprechenden Stellen, an den Computer 9 (Fig. 1) angeschlossen, Fühler für das Anlegen von Immobilisierungsschienen und Fühler für das Anwinkeln der Extremitäten in den Ellenbogen- und Hüftgelenken angeordnet sind. An einer oberen Extremität 5 (Fig. 8) der menschlichen Puppe 1 sind Fühler 77 und 78 für das Anlegen von Schienen angeordnet, die in Form von zwei mechanischen Kontakten ausgebildet sind, die jeweils unterhalb von im Bereich des Unterarms in der Hülle der oberen Extremitäten ausgebildeten durchgehenden Öffnungen fest angebracht sind.

Die menschliche Puppe 1 ist auch mit Fühlern 79 und 80 für das Anlegen von Schienen auf eine untere Extremität versehen, die in Form von zwei mechanischen Kontakten ausgebildet sind, die jeweils unterhalb von durchgehenden Öffnungen fest angebracht sind, die in der Hülle der Rumpfeinheit 4 und in der Hülle des Oberschenkels der menschliche Puppe 1 ausgebildet sind. Die Extremitäten 5 und 6 der menschliche Puppe 1 sind in den Ellenbogen- und Hüftgelenken mit Fühlern in Form von im Bereich der Ellenbogen- und Hüftgelenke angeordneten Dauermagneten 81 und 82 sowie magnetbetätigten Kontakten 83 und 84 versehen, die gegenüber den genannten Dauermagneten angebracht und an den Computer 9 (Fig. 1) angeschlossenen sind und die operativ mit dem entsprechenden genannten Dauermagnet zusammenwirken.

In der menschlichen Puppe 1 (Fig. 8) ist ein Satz von Pulsimitatoren angeordnet, umfassend einen Kopfarterien-Pulsimitator 85, einen Unterarmarterien-Pulsimitator 86, einen Oberarmarterien-Pulsimitator 87 und einen Oberschenkelarterien-Pulsimitator 88. Jeder der genannten Pulsimitatoren enthält ein Gehäuse 89 (Fig. 3, 9), in dem ein an den Computer 9 (Fig. 1) angeschlossener Elektromagnet 90 angeordnet ist und ein darüber frei angebrachter Dauermagnet 91 (Fig. 3, 9), der durch eine dämpfende Zwischenlage 92 von dem Elektromagnet 90 getrennt ist, wobei der Dauermagnet 91 mit dem unteren Ende einer Stange 93 fest verbunden ist, deren freies Ende in einer durchgehenden Öffnung beweglich angeordnet ist, die in der Hülle der menschlichen Puppe 1 (Fig. 8) an einer den medizinischen Anforderungen entsprechenen Stelle angebracht ist. Der Elektromagnet 90 (Fig. 3, 9) ist an einen Personalcomputer 9 (Fig. 1) angeschlossen, während der Dauermagnet 91 (Fig. 3, 9) mit dem Elektromagnet 90 und mittels der Stange 93 mit den Fingern des Auszubildenden operativ zusammenwirkt. Die genannten Pulsimitatoren 87 und 88 (Fig. 8) von Oberarmarterie und Oberschenkelarterie sind mit Fühlern für das Abdrücken der entsprechenden Arterien kombiniert, wozu das Gehäuse 89 (Fig. 9) des entsprechenden Pulsimitators in einem gemeinsamen Gehäuse 94 frei angeordnet ist und unter ihm ein mechanischer Kontakt 95 befestigt ist, dessen einer Teil am Gehäuse 89 des Pulsimitators anliegt, während der andere Teil am gemeinsamen Gehäuse 94 anliegt. Der Kontakt 95 ist an den Computer 9 (Fig. 1) angeschlossen und wirkt mit dem Gehäuse 89 (Fig. 9) des Pulsimitators zusammen.

In der Puppe 1 (Fig. 8) ist ein Satz von Videoimitatoren 96, 97, 98 und 99 äußerer Blutungen bei penetrierenden Verletzungen angebracht. Im Schläfenbereich ist ein Videoimitator 96 einer äußeren Blutung angeordnet, im Bereich der Lunge ist ein Videoimitator 97 einer äußeren Blutung angeordnet, im Bereich des Ellenbogens ist ein Videoimitator 98 einer äußeren Blutung angeordnet und im Bereich des Unterschenkels ist ein Videoimitator 99 einer äußeren Blutung angeordnet. Jeder der genannten Videoimitatoren weist ein an einer entsprechenden Stelle unter der Hülle der Puppe (Fig. 8) angeordnetes Lichtfilter 100 (Fig. 4) in Form eines Blutflecks auf, unter dem ein an den Computer 9 (Fig. 1) angeschlossenes Ausleuchtelement 101 (Fig. 4) angeordnet ist. Neben jedem Videoimitator 96, 97, 98 und 99 äußerer Blutungen ist ein mechanischer Kontakt 102 (Fig. 4) angeordnet; unmittelbar darüber ist in der Hülle der Puppe eine durchgehende Öffnung ausgebildet, in der beweglich ein Stift 103 angebracht ist. Der mechanische Kontakt 102 ist an den Computer 9 (Fig. 1) angeschlossen und wirkt mit Hilfe des Stiftes 103 (Fig. 4) mit den Fingern des Auszubildenden oder mit einem Druckverband operativ zusammen.

Die Puppe 1 (Fig. 8) ist auch mit Fühlern 104 und 105 für das Anlegen einer blutstillenden medizinischen und improvisierten Abbindung versehen.

Die Fühler 104 und 105 sind an den medizinischen Forderungen entsprechenden Stellen angeordnet. Der Fühler 104 ist im Bereich des oberen Drittels des Oberarms und der Fühler 105 im Bereich der Mitte des Oberschenkels angeordnet, wobei die genannten Fühler mechanische Kontakte darstellen, ähnlich den oben beschriebenen, die mit den Fingern des Auszubildenden oder mit einem Druckverband operativ zusammenwirken.

Das Steuersystem für den Ausbildungsvorgang ist mit einem an den Computer 9 angeschlossenen elektrischen Übungsdefibrillator 106 (Fig. 1) versehen, der einen Videoimitator 107 von Elektrokardiogrammkurven sowie abnehmbare Elektroden 108 und 109 enthält, wobei jede der abnehmbaren Elektroden 108 und 109 ein Gehäuse 110 (Fig. 10) aufweist, in dem ein magnetbetätigter Kontakt 111 angeordnet ist, der innerhalb des Gehäuses 110 auf dessen Boden befestigt ist, und das einen mechanischen Kontakt 112 aufweist, der im Handgriff der abnehmbaren Elektrode 108, 109 eingebaut ist. Auf der Außenseite der Elektrode 108, 109 ist eine elastisch verformbare Unterlage 113 befestigt. Der magnetbetätigte Kontakt 112 der jeweiligen Elektrode wirkt operativ mit den auf der Innenseite des Frontpaneels 50 der Brustkorb- und Baucheinheit im Herzbereich angebrachten Dauermagneten 114, und 115 (Fig. 8) zusammen. Wie oben beschrieben, weist das Steuersystem für den Ausbildungsvorgang ein anatomisches Display 7 (Fig. 1) auf, das ein Gehäuse 116 (Fig. 11) darstellt, in dem ein Reliefpaneel 117 Umrisse lebenswichtiger menschlicher innerer Organe abbildende Felder 118 und Bereiche von traumatische Verletzungen derselben abbildende Felder 119 aufweist. In den genannten Feldern 118 und 119 sind an den Computer 9 (Fig. 1) angeschlossene Ausleuchtelemente 120 installiert. Über dem genannten Reliefpaneel 117 (Fig. 11) ist ein farbiges Diapositiv 121 unterschiedlichen Kontrasts angeordnet mit der Darstellung des menschlichen Skeletts 122, mit der Darstellung des Hirns 123, mit der Darstellung des Herzens 124, mit der Darstellung der Lungen 125, mit der Darstellung des Arterienverlaufs 126, mit der Darstellung des Magens 127, sowie mit der Darstellung von Blutflecken 128 im Schläfen-, Ellenbogen- und Unterschenkelbereich eines Menschen, der Darstellung von Brüchen der Extremitäten 129 und der Darstellung eines Wirbelsäulenbruches 130. Das Diapositiv 121 ist mit einem aus halbdurchsichtigem Material ausgebildeten Schutzschirm 131 von oben abgedeckt. Unter dem Schirm 131 ist auf dem Reliefpaneel 117 ein Anzeiger 132 für die Kontrollzeit der Ausbildungsprogramme vorgesehen, der ebenfalls an den Computer 9 (Fig. 1) angeschlossen ist. Das anatomische Display 7 ist zusätzlich mit Ausleuchtelementen 133 (Fig. 11) versehen, die am Reliefpaneel 117 angebracht und ebenfalls an den Computer 9 (Fig. 1) angeschlossen sind. Die Ausleuchtelemente 133 (Fig. 11) bilden die Wege des durch den Körper eines unter Spannung geratenen Menschen fliessenden Stroms in dem Moment eines Elektrotraumas nach. Die menschliche Puppe 1 (Fig. 1) ist zusätzlich mit einem ebenfalls an den Computer 9 (Fig. 1) angeschlossenen Imitator 134 der Befreiung des Menschen von der Berührung mit stromführenden Teilen elektrischer Anlagen versehen. Im Computer 9 (Fig. 2) ist zusätzlich eine Parallelinterface-Platte 135 angebracht, die dem Steuersystem für den Ausbildungsvorgang mehrseitige Verbindungen mit der Puppe 1 und dem anatomischen Display 7 ermöglicht.

Die vorliegende Übungsvorrichtung arbeitet nach Maßgabe folgender Ausbildungsprogramme:
- Vorärztliche Eildiagnose der Notzustände des "Verletzten";
- Erste Hilfe bei äußerer Schläfenblutung;
- Erste Hilfe bei penetrierender Verletzung des Brustkorbs;
- Erste Hilfe bei äußerer Blutung von Gefäßen einer oberen Extremität;
- Sofortige Hilfe bei starker äußerer Blutung von Gefäßen einer oberen Extremität;
- Erste Hilfe bei äußerer Blutung von Gefäßen einer unteren Extremität;
- Sofortige Hilfe bei starker äußerer Blutung von Gefäßen einer unteren Extremität;
- Erste Hilfe bei geschlossenem Bruch einer oberen Extremität;
- Erste Hilfe bei geschlossenem Bruch des Oberschenkels;
- Erste Hilfe bei geschlossenem Bruch des Unterschenkels;
- Sofortige Befreiung der oberen Atemwege von einer Verlegung durch die Zungenwurzel;
- Sofortige Wiederingangbringung der Herztätigkeit durch einen Schlag in die Herzgegend;
- Erste Hilfe bei einer Obturation der oberen Atemwege durch einen Fremdkörper;
- Befreiung der Atemwege von einer Obturation durch die Zungenwurzel und weiches Rachengewebe;
- Befreiung der Atemwege und innerer Organe von flüssigem Inhalt;
- Befreiung der Atemwege von einer Verlegung durch die Zungenwurzel bei einem Trauma im Bereich der Halswirbelsäule;
- Wiederingangbringung der Herztätigkeit mit Hilfe eines Elektroschocks (elektrische Defibrillation);
- Lungen-Wiederbelebung;
- Herz-Lungen-Hirn-Wiederbelebung;
- Entfernung von Luft aus dem Magen;
- Erste Hilfe bei Verletzung durch elektrischen Strom.

Die menschliche Puppe 1 (Fig. 1) ist mit einem Satz von austauschbaren Vorrichtungen 10 zum Schutz der Auszubildenden vor gegenseitiger Ansteckung versehen. Beim Wechsel des Auszubildenden wird in die Puppe 1 eine andere, zuvor in einer Desinfektionslösung behandelte Vorrichtung 10 zum Schutz der Auszubildenden vor gegenseitiger Ansteckung eingesetzt. Dies ermöglicht eine 100%-ige Gewährleistung des Schutzes der Auszubildenden beim Üben von Maßnahmen der künstlichen Beatmung an der Puppe 1, weil die Vorrichtung 10 zum Schutz der Auszubildenden vor gegenseitiger Ansteckung die einzige Einheit in der menschliche Puppe 1 darstellt, mit der der Mund des Auszubildenden in Berührung kommt. Der Vorgang des Desinfizierens der Vorrichtung 10 unterbricht die Ausbildung nicht und ist zeitlich auf ein Minimum reduziert. Nachfolgend wird die Arbeit an der Übungsvorrichtung am Beispiel einiger Programme beschrieben.

Mit Hilfe von elektrischen Kabeln werden die menschliche Puppe 1, das anatomische Display 7 und der elektrische Übungsdefibrillator 106 an den Computer 9 (Fig. 1) angeschlossen.

Mit Hilfe der Tastatur des Computers 9 wird auf dem Bildschirm ein Hauptpanel (in den Zeichnungen nicht dargestellt) des Menüs von Ausbildungsprogrammen ausgegeben. Mit dem Manipulator des Computers 9 wird beispielsweise das Programm "Sofortige Befreiung der oberen Atemwege von einer Verlegung durch die Zungenwurzel" gestartet. Vom Computer 9 (Fig. 1) gelangen entsprechende Signale an die menschliche Puppe 1, das anatomische Display 7 und den elektrischen Defibrillator 106. An den Elektromagnet 53 (Fig. 5) gelangen Stromimpulse mit der Atemfrequenz des Menschen. Mit dem Elektromagnet 53 wirkt der Dauermagnet 52 zusammen, weshalb das Frontpaneel 50 des Brustkorbs der Rumpfeinheit 4 der menschlichen Puppe 1 (Fig. 1) "Atem"-Bewegungen ausführt.

An den Elektromagnet 90 (Fig. 3) des Kopfschlagader-Pulsimitators 85 und an die entsprechenden Elektromagnete der Pulsimitatoren 86, 87, 88 (Fig. 8) der menschlichen Puppe 1 gelangen Stromimpulse mit der Pulsfrequenz des Menschen. Mit der gleichen Frequenz wirkt der Elektromagnet 90 über die dämpfende Zwischenlage 92 (Fig. 3) auf den Dauermagnet 91 und die Stange 93. Damit wird an der menschlichen Puppe 1 (Fig. 1) das Verhalten des lebenden Menschen nachgebildet. Der Auszubildende sieht an der Puppe 1 die Bewegungen der Vorderwand des Brustkorbs, enge Pupillen der Imitatoren 32 der Augen des Menschen und fühlt, indem er mit den Fingern die Stange 93 berührt, die Pulsschläge. Gleichzeitig gelangen entsprechende Stromimpulse an die Ausleuchtelemente 120 (Fig. 11), die in den Feldern 118 des anatomischen Displays 7 der entsprechenden Videoimitatoren der inneren Organe des Menschen angeordnet sind, und an den Kontrollzeit-Anzeiger 132. Der Auszubildende sieht damit auf dem anatomischen Display 7 (Fig. 1) die Darstellungen eines pulsierenden Herzens, sich mit Luft füllender Lungen, des pulsierenden arteriellen Blutstroms des Hirns und freier oberer Atemwege. Am Anzeiger 132 läuft eine Zeitzählung. Der Auszubildende hat damit die Möglichkeit, nicht nur lebenswichtige äußere anatomische Anzeichen des lebenden Organismus des Menschen an der Puppe 1 zu sehen und zu fühlen, sondern auch adäquate Funktionen der inneren Organe des Menschen auf dem Display 7 zu beobachten. Die beschriebene "Lebensphase" wird an der Übungsvorrichtung am Anfang aller Ausbildungsprogramme ohne Ausnahme nachgebildet.
Nach Ablauf einiger Zeit werden an der Übungsvorrichtung Anzeichen nachgebildet, die dem Zustand eines Menschen entsprechen, bei dem auf Grund eines Traumas die oberen Atemwege verstopft sind. An der Puppe 1 (Fig. 8) werden die oben beschriebenen Imitatoren stromlos gemacht, und das Ausleuchtelement 38 (Fig. 3) des Augenimitators 32 erlischt. Das undurchsichtige Filter 37 ist auf den Untergrund des die weite Pupille nachbildenden Lichtfilters 36 nicht sichtbar. Die Pulsschläge und die Bewegungen des Frontpaneels 50 (Fig. 8) an der menschlichen Puppe 1 (Fig. 1) hören auf, und die Pupillen der Augenimitatoren 32 werden weit. Auf dem Display 7 (Fig. 11) werden entsprechende Ausleuchtelemente 120 stromlos gemacht, jedoch bleibt ein Teil von ihnen unter Strom. Gleichzeitig mit einem Summersignal des Computers 9 (Fig. 1) wird die Kontrollzeit des ausgewählten Programms am Anzeiger 123 eingestellt, und ihre Rückzählung beginnt. An der menschlichen Puppe 1 und auf dem Display 7 stellt der Auszubildende für den klinischen Tod des Menschen charakteristische Anzeichen fest. Die "Phase des klinischen Tods" wird an der Übungsvorrichtung während der Kontrollzeit des Programms nachgebildet. Zu diesem Zeitpunkt bleibt ein Teil der Ausleuchtelemente 120 (Fig. 11), die in dem dem Imitator des Hirns entsprechenden Feld 118 angeordnet sind, unter Strom. Der Auszubildende sieht auf dem anatomischen Display 7 (Fig. 1) die Darstellung einer Luftröhre, die von der Zungenwurzel verlegt ist; trotz des Fehlens des arteriellen Blutstroms hat ein Teil der Hirnimitatoren eine rosa Farbe. Dies hilft dem Auszubildenden, die anatomische Pathophysiologie des Menschen besser zu verstehen, zu verstehen, dass in der "Phase des klinischen Tods" im Gehirn des Menschen noch keine irreversiblen Vorgänge stattgefunden haben und dass man ihn noch retten kann, wenn man sofort mit Nothilfe-Maßnahmen anfängt. Der Auszubildende legt eine Hand unter die Halseinheit 3 der menschlichen Puppe 1, die andere Hand auf die Stirn der Kopfeinheit 2, und biegt die Kopfeinheit 2 der menschlichen Puppe 1 zurück. Der Kinnbereich der Kopfeinheit 2 verschiebt sich an der vorderen Wand des Zylinders 39 (Fig. 3) der Halseinheit 3 zu dessen oberen Kante hin. Wenn der Fühler für das Zurückbiegen der Kopfeinheit 2 anspricht, weil sich der magnetbetätigte Kontakt 42 an den Dauermagnet 41 annähert, gelangt ein Signal vom magnetbetätigten Kontakt 42 zum Computer 9 (Fig. 2), von dem aus entsprechende Signale an die menschliche Puppe 1 und in das anatomische Display 7 gelangen. Damit stellt sich auf der Übungsvorrichtung die oben beschriebene "Lebensphase" wieder her. Der Auszubildende überzeugt sich von der Wirksamkeit seiner Handlungen, indem er die Anzeichen der Lebensfunktionen an der menschlichen Puppe 1 (Fig. 1) und auf dem anatomischen Display 7 beobachtet und kontrolliert. Fehler im Programm sind dabei ein Nichtzurückbiegen oder ein nicht ausreichendes Zurückbiegen der Kopfeinheit 2 oder die Durchführung der Maßnahme nach Ablauf der Kontrollzeit des Programms. In diesem Fall werden auf der Übungsvorrichtung Anzeichen des biologischen Todes nachgebildet. Im Feld 118 (Fig. 11) werden entsprechende Ausleuchtelemente 120 stromlos gemacht. Die Darstellung des Gehirns auf dem anatomischen Display 7 (Fig. 1) wird grau; auf dem Display 7 verbleibt dabei die Darstellung der von der Zungenwurzel verlegten Luftröhre. Alle weiteren Versuche, die menschliche Puppe 1 "wiederzubeleben", werden unwirksam, weil der Computer 9 die "Wiederbelebungs"-Kreise blockiert. Die Praxis zeigt, dass ungefähr 20% der in Extremsituationen verletzten Menschen bei rechtzeitigem und richtigen Zurückbiegen des Kopfes des Verletzten gerettet werden können.

Des Weiteren wird beispielsweise das Programm "Herz-Lungen-Hirn-Wiederbelebung" gewählt.

Die Übungsvorrichtung geht in Analogie zu dem oben beschriebenen Programm zur Nachbildung des "klinischen Todes" über. In diesem Fall erzeugt der Computer 9 beim Zurückbiegen der Kopfeinheit 2 (Fig. 1) der menschlichen Puppe kein Signal "Belebung". Ungeachtet dessen, dass der Auszubildende die Kopfeinheit 2 schnell und richtig zurückgebogen hat und auf dem anatomischen Display 7 die oberen Atemwege frei geworden sind, fängt der Auszubildende mit der künstlichen Beatmung und der äußeren Herzmassage an. Entsprechend der medizinischen Anweisung führt er nach einem Atemstoß 5 Herzkompressionen durch, und dieses Verhältnis soll innerhalb der ganzen Kontrollzeit des Programms beibehalten werden. Beim Zurückbiegen der Kopfeinheit 2 (Fig. 3) in Analogie zu dem oben beschriebenen Programm werden die oberen Atemwege frei. Der Auszubildende hält die Kopfeinheit 2 (Fig. 1) der menschlichen Puppe 1 im zurückgebogenen Zustand und sieht, wie der bewegliche Teil 12 (Fig. 3) der Gesichtsmaske, der die Unterlippe nachbildet, sich nach vorn bewegt, weil beim Ansprechen des magnetbetätigten Kontaktes 42 vom Computer 9 (Fig. 2) ein Stromimpuls in die Wicklung des Elektromagneten 29 (Fig. 3, 4) gelangt. Der Dauermagnet 30 löst sich vom Elektromagneten 29, und der bewegliche Teil 12 der Gesichtsmaske bewegt sich nach vorne und wird in dieser Position mit Hilfe der Platte 24 und der Stifte 23 gehalten, die sich in den Aussparungen 19, 20 des unbeweglichen Teils 11 der Gesichtsmaske der Kopfeinheit 2 bewegen. Der Auszubildende schiebt den beweglichen Teil 12 nach unten, öffnet die Mundöffnung 17, umfasst dann mit seinem Mund den Mund der Kopfeinheit und atmet tief aus. Die Luft gelangt in die Röhre 14 und weiter in die Atmosphäre und wirkt auf den Stab 25 ein, der unter dem Druck der ausgeatmeten Luft den gegenseitigen Widerstand der Dauermagnete 26, 27 überwindet und sich nach unten verschiebt. Der Dauermagnet 26 schließt den magnetbetätigten Kontakt 28, von dem aus ein Signal zum Computer 9 (Fig. 2) gelangt. Danach legt der Auszubildende die Hände auf das Frontpaneel 50 (Fig. 5) der Rumpfeinheit 4 auf und drückt stoßartig darauf. Das Frontpaneel 50 überwindet zusammen mit dem festen Paneel 47 den Widerstand des elastisch verformbaren Elements 49 und geht nach unten. Der Dauermagnet 56 nähert sich dem magnetbetätigten Kontakt 57, von dem aus ein Signal zum Computer 9 (Fig. 2) gelangt. Von der menschlichen Puppe 1 (Fig. 1) gelangt so eine Reihe von Impulsen zum Computer 9: ein Impuls vom Fühler für die künstliche Beatmung und fünf Impulse vom Fühler für die äußere Herzmassage. Der Computer 9 speichert die Impulsreihen und erzeugt Antwortsignale der oben beschriebenen "Wiederbelebungskreise" der Übungsvorrichtung. Im Falle einer falschen Position der Hände des Auszubildenden auf dem Paneel 50 (Fig. 5) verschiebt sich dieses mit Verzerrung nach unten. Der entsprechende mechanische Kontakt 58 spricht an, und der Computer 9 (Fig. 2) blockiert die "Wiederbelebungskreise", wonach er den Summer und ein ensprechendes Element 120 (Fig. 11) einschaltet, das in einem dem Ort des Ansetzens der Kraft des Auszubildenden auf dem Paneel 50 (Fig. 5) der Rumpfeinheit 4 entsprechenden Bereich angeordnet ist. Im Falle übermäßiger Anstrengung bei der äußeren Herzmassage sinkt das freie Ende des festen Paneels 47 maximal nach unten und schaltet den mechanischen Kontakt 61 ein, von dem aus ein Signal zum Computer 9 (Fig. 2) gelangt. Als Antwort darauf blockiert der Computer 9 die "Wiederbelebungskreise" der Übungsvorrichtung, schaltet den Summer ein und gibt pulsierende Stromimpulse an eine Gruppe von ensprechenden, auf dem Reliefpaneel 117 in der Herzgegend angeordneten Ausleuchtelementen 120 (Fig. 11) ab. Damit werden auf der menschlichen Puppe 1 und auf dem anatomischen Display 7 Anzeichen des biologischen Todes eines Menschen nachgebildet, und zwar: In der menschlichen Puppe 1 fehlen Bewegungen des Frontpaneels 50 (Fig. 5); es fehlt der Pulsschlag an den Pulsimitatoren 85, 86, 87, 88 (Fig. 8). Die Pupillen des Augenimitators 32 sind weit; auf dem anatomischen Display 7 (Fig. 1) erscheint die Darstellung zusammengefallener Lungen, des zusammengedrückten Herzens; die Farbe des Hirns ist grau, der arterielle Blutstrom fehlt, und um as Herz herum blinkt eine Gruppe von entsprechenden Ausleuchtelementen.

Damit sieht der Auszubildende den Ort der falschen Position der Hände bei der Herzmassage auf dem Display 7. Dies hilft ihm, seine Fehler zu korrigieren. Im wirklichen Leben kann der hilfeleistende Mensch durch falsches Aufsetzen der Hände bei der äußeren Herzmassage dem Verletzten zum Tode führende Schäden der inneren Organe zuzufügen.

Vor dem Beginn der äußeren Herzmassage ist es erforderlich, die die Bewegungen des Bauchs behindernde Kleidung des Verletzten zu öffnen. An der menschlichen Puppe 1 (Fig. 1) simuliert der Auszubildende das Öffnen der Gürtelschnalle. Am Modell 71 der Gürtelschnalle wird das Einschiebsel 73 (Fig. 7) zur Seite geschoben, der mechanische Kontakt 76 spricht an, ein Signal gelangt zum Computer 9 (Fig. 2). Antwortsignale vom Computer 9 legen eine Speisespannung an den Lichtindikator 74 (Fig. 7) an und deblockieren den Kreis des Fühlers für die äußere Herzmassage. Gelangt bei nicht geöffneter Schnalle ein Signal vom Fühler für die äußere Herzmassage zum Computer 9 (Fig. 2), so blockiert der Computer 9 die "Wiederbelebungskreise", schaltet den Summer ein und gibt eine pulsierende Spannung an den Lichtindikator 74 und das entsprechende, auf dem Reliefpaneel 117 in der Bauchgegend angeordnete Ausleuchtelement 120 (Fig. 11) ab. Der Auszubildende merkt, dass er einen groben Fehler begeht, wenn er die äußere Herzmassage bei nicht geöffnetem Gürtel durchführt. Im wirklichen Leben kommt es bei einem Verletzten in der Bauchhöhle zu einen dynamischer Schlag; die Leber wird zerstört, was zu einem letalen Ausgang führen kann.

Bei Wahl beispielsweise des Programms "Erste Hilfe bei äußerer Schläfenblutung" wird an der Übungsvorrichtung eine äußere Blutung bei einer Kopfverletzung simuliert. Vom Computer 9 (Fig. 1) aus gelangen pulsierende Stromimpulse an das Ausleuchtelement 101 (Fig. 4) des Videoimitators der äußeren Blutung 96 (Fig. 8) in der Kopfeinheit 2 der menschlichen Puppe 1 und das ensprechende Ausleuchtelement 120 (Fig. 11) im anatomischen Display. Damit werden an der menschlichen Puppe 1 (Fig. 1) und auf dem anatomischen Display 7 alle oben beschriebenen Anzeichen des "lebenden" Organismus simuliert, mit dem Unterschied, dass die Frequenz der Stromimpulse, die an die Pulsimitatoren 85, 86, 87 und 88 der menschlichen Puppe und an die den arteriellen Blutstrom auf dem anatomischen Display 7 nachbildenden Ausleuchtelemente 120 (Fig. 11) gelangen, sich um ein Vielfaches erhöht. Damit sieht der Auszubildende an der Kopfeinheit 2 (Fig. 8) der Puppe 1 im Schläfenbereich und auf dem Display 7 (Fig. 1) ebenfalls im Schläfenbereich einen pulsierenden Blutfleck. Der Auszubildende legt innerhalb der Kontrollzeit des Programms auf den Blutfleck einen Druckverband (in den Zeichnungen nicht dargestellt) auf, der über den Stift 103 auf die mechanischen Kontakte 102 (Fig. 4) einwirkt. Vom mechanischen Kontakt 102 aus gelangt ein Signal zum Computer 9 (Fig. 2), der die Kreise der genannten Videoimitatoren abschaltet und die Frequenz der Stromimpulse, der Pulsimitatoren und des arteriellen Blutstroms wiederherstellt. An der menschlichen Puppe 1 (Fig. 1) und auf dem anatomischen Display 7 verschwinden die pulsierenden Blutflecken, und die Frequenz von Puls und arteriellem Blutstrom stellt sich wieder her. Bei fehlerhaften Handlungen wie nicht richtig angelegtem Verband, überschrittene Kontrollzeit des Programms, werden an der Übungsvorrichtung die oben beschriebenen Anzeichen des klinischen Todes nachgebildet. Dabei verbleibt an der menschlichen Puppe 1 und auf dem anatomischen Display 7 die Darstellung von Blutflecken im Schläfenbereich. Der Auszubildende erkennt seine Unfähigkeit, die äußere Blutung zu stillen. Im wirklichen Leben kommt es zu großem Blutverlust und zum Tod des Verletzten.

Im Programm "Sofortige Wiederingangbringung der Herztätigkeit durch einen Schlag in die Herzgegend" werden an der Übungsvorrichtung die oben beschriebenen Anzeichen des "klinischen Todes" simuliert. Der Auszubildende führt einige Faustschläge gegen das Frontpaneel 50 (Fig. 5) der Brustkorbeinheit in der Herzgegend. Auf die Schläge spricht der Fühler 66 an. Die Dauermagnete 68 und 69 (Fig. 6) überwinden den gegenseitigen Widerstand und verschieben sich in den Bereich des magnetbetätigten Kontakts 70, von dem aus ein Signal zum Computer 9 (Fig. 2) gelangt. Der Computer 9 stellt an der Übungsvorrichtung die oben beschriebenen Anzeichen des "lebenden" Organismus wieder her. Bei fehlerhaften Handlungen wie nicht richtig gewählter Ort des Schlages oder Ausführung des Schlages nach Ablauf der Kontrollzeit des Programms bleiben an der Übungsvorrichtung alle charakteristische Anzeichen des "klinischen Todes" erhalten. Diese einfache und wirksame Maßnahme entspricht den bekannten medizinischen Weltstandards einschließlich der von der Arbeitsgruppe des Europäischen Rats festgelegten Standards für die Wiederbelebung. Im wirklichen Leben werden mit dieser Maßnahme in der Welt Hunderte von Leben gerettet.

Im Programm "Erste Hilfe bei Verletzung durch elektrischen Strom" werden auf dem Monitor des Computers 9 (Fig. 1) Darstellungen von Fragmenten des Geratens des Menschen unter elektrische Spannung gezeigt, die charakteristisch für bekannte, durch den Menschen verlaufende Stromschleifen sind, sowie Darstellungen von verschiedenen, gerade zur Verfügung stehenden oder speziellen Mitteln, mit deren Hilfe man den Verletzten von der Berührung mit den stromführenden Teilen befreit.

Es sei beispielsweise ein Fragment eines Programms gewählt, in dem ein Mensch verschiedenpolige Teile einer elektrischen Anlage mit den Händen berührt. Nach Ablauf der oben beschriebenen "Lebensphase" beginnt die Rückzählung der Kontrollzeit des Programms, und der Summer ertönt. Vom Computer 9 gelangen in die menschliche Puppe 1 (Fig. 1) zusätzlich Stromimpulse an den Imitator 133 der Trennung des Menschen vom elektrischen Kreis. Im anatomischen Display 7 gelangen Stromimpulse an die Ausleuchtelemente 134 (Fig. 11) der Stromwege durch den Menschen und Stromimpulse erhöhter Frequenz an entsprechende Ausleuchtelemente 120, die im Feld 118 des Videoimitators des menschlichen Herzens angeordnet sind. Damit erkennt der Auszubildende an der menschlichen Puppe 1 (Fig. 1) keine "Lebenszeichen", sieht aber den blinkenden Imitator 133 und auf dem anatomischen Display 7 die Darstellung des fibrillierenden Herzens und die durch die Hände und das Herz des "Menschen" verlaufende pulsierende Linie. Der Auszubildende wählt mit Hilfe des Manipulators des Computers 9 die Mittel, mit deren Hilfe er den Verletzten vom Strom befreit. Hier muß er die Klasse der Spannung, Niederspannung bis 1000 Volt oder Hochspannung über 1000 Volt, berücksichtigen. Bei richtiger Wahl der genannten Mittel schaltet der Computer 9 den Imitator 133 an der menschlichen Puppe 1 sowie die Ausleuchtelemente 134 (Fig. 11) der Stromwege durch den Menschen auf dem anatomischen Display 7 (Fig. 1) ab. Der Summer verstummt, und der Auszubildende erkennt, dass der Strom durch den Verletzten unterbrochen ist. Alle "Lebenszeichen" fehlen aber, und auf dem Display 7 erscheint die für das Elektrotrauma bei Stromdurchgang durch das Herz charakteristische Darstellung des fibrillierenden Herzens. Den Verletzten kann nur die Maßnahme der elektrischen Defibrillation retten.

Der Auszubildende legt die Elektroden 108 und 109 des elektrischen Übungsdefibrillators 106 auf das Frontpaneel 50 (Fig. 8) der Rumpfeinheit 4 der menschlichen Puppe 1 im Herzbereich an und drückt sie daran an. Die Unterlage 113 (Fig. 10) drückt sich zusammen und die magnetbetätigten Kontakte 111 sprechen auf Grund der Einwirkung der Dauermagnete 114 und 115 auf sie an. Von den genannten Kontakten gelangt ein Signal zum Computer 9 (Fig. 1), der den Videoimitator 107 der EKG-Kurven einschaltet, auf dem dann die Darstellung entsprechender Fibrillationskurven aufleuchtet.

Der Auszubildende erkennt erneut, dass das Herz fibrilliert, und drückt auf in den Handgriffen der Gehäuse 110 (Fig. 10) der Elektroden 108 und 109 (Fig. 1) vorgesehene Tasten. Dabei sprechen die mechanischen Kontakte 112 an, und der Computer 9 gibt einen Befehl zum Einschalten aller oben beschriebenen Imitatoren der Lebensfunktionen des Menschen, einschließlich des Herzens, ab. Gleichzeitig schaltet der Computer 9 auf dem Videoimitator 107 die Ausleuchtung der Darstellung einer Sinusrhythmus-EKG-Kurve ein und die Darstellung der Fibrillationskurven aus.

Dieses Programm erlaubt es, die Spezifik des Elekrotraumas besser zu verstehen, den Auszubildenden das Gefühl einer gesunden Angst und Vorsicht gegenüber der Elektrizität einzuprägen, ferner sich die Maßnahmen der sofortigen Hilfe für einen durch elektrischen Strom, einschließlich Blitzschlag, verletzten Menschen anzueignen und die Situation weitestgehend an das wirkliche Leben anzunähern.

### Gewerbliche Verwertbarkeit

Die vorliegende Übungsvorrichtung ermöglicht den kürzesten Weg zur Aneignung moderner, wissenschaftlich begründeter Maßnahmen der medizinischen Nothilfe für einen Menschen. Sie ermöglicht es, in kürzestmöglicher Zeit eine große Anzahl von Menschen unter Gewährleistung eines 100%-igen Schutzes vor gegenseitiger Ansteckung auszubilden.

Die Übungsvorrichtung ist einfach handhabbar und bedarf keiner besonderen Arbeitsbedingungen; sie ist wegen des Fehlens einer Sprachversion Menschen jeglicher Nationalität zugänglich, die älter als zwölf Jahre sind, unabhängig von ihrem Tätigkeitsbereich.

Die Übungsvorrichtung gibt den Auszubildenden die Möglichkeit, ein stabiles dynamisches Stereotyp von praktischen Fertigkeiten zu erwerben und gleichzeitig anatomische Vorstellungen über den menschlichen Organismus bei Einwirkung negativer Faktoren darauf zu gewinnen.

Die Übungsvorrichtung findet breite Verwendung in Schulen, Fach- und Hochschulen beliebiger Art. Von besonderem Interesse ist sie für Leute, die ihre berufliche Tätigkeit unter Risikobedingungen ausüben, insbesondere Militärs, Feuerwehrleute, Rettungsdienstleistende, Elektriker, aber auch für Fachleute, die sich mit Fragen der Gesundheit und des Arbeitsschutzes befassen.

## Patentansprüche

1. Übungsvorrichtung zur Ausbildung in Erste-Hilfe-Maßnahmen für einen Menschen in Notfallsituationen, enthaltend eine menschliche Puppe (1) mit beweglich miteinander verbundenen: Kopfeinheit (2), Halseinheit (3), Rumpfeinheit (4) mit oberen und unteren Extremitäten (5 bzw. 6), in denen Imitatoren von Lebensfunktionen des Menschen mit Fühlern für äußere Einwirkungen darauf angeordnet sind, ein anatomisches Display (7) mit einem Satz (8) von Videoimitatoren der inneren Organe des Menschen und ihrer traumatischen Verletzungen und einen elektrischen Übungs-Defibrillator (106) mit an einen Computer (9) eines Steuersystems für den Ausbildungsvorgang angeschlossenen abnehmbaren Elektroden (108, 109),
**dadurch gekennzeichnet,**
**dass** die Übungsvorrichtung Stromwege durch die inneren Organe des Menschen nachbildende Ausleuchtelemente (134) und einen Imitator (133) einer Trennung des Menschen von einem elektrischen Stromkreis enthält, die an den Computer (9) des Steuersystems für den Ausbildungsvorgang und an operativ mit den abnehmbaren Elektroden (108, 109) des Übungs-Defibrillators (106) zusammenwirkende Fühler für äußere Einwirkungen angeschlossen sind, wobei die Ausleuchtelemente (134) für die Stromwege durch die inneren Organe des Menschen in dem anatomischen Display (7) angeordnet sind, während der Imitator (133) der Trennung des Menschen vom elektrischen Stromkreis in der menschlichen Puppe (1) angeordnet ist.

2. Übungsvorrichtung nach Anspruch 1,
**dadurch gekennzeichnet,**
**dass** die die Stromwege durch die inneren Organe des Menschen nachbildenden Ausleuchtelemente (134) mit dem Satz (8) von Videoimitatoren der inneren Organe des Menschen kombiniert und auf einem Reliefpaneel (117) des anatomischen Displays (7) angeordnet sind, wobei die Ausleuchtelemente miteinander in Reihe geschaltet sind.

3. Übungsvorrichtung nach Anspruch 1 oder 2,
**dadurch gekennzeichnet,**
**dass** der Imitator (133) einer Trennung des Menschen von einem elektrischen Stromkreis als mechanischer Kontakt, kombiniert mit einem auf der Außenfläche der Rumpfeinheit (4) der menschlichen Puppe (1) im Bereich der Vorderwand des Brustkorbs angebrachten Lichtindikator, ausgebildet ist und mit den Händen des Auszubildenden operativ zusammenwirkt.

4. Übungsvorrichtung nach Anspruch 1,
**dadurch gekennzeichnet,**
**dass** das Steuersystem für den Ausbildungsvorgang mit einer Vorrichtung zum wiederholten Start eines gewählten Computerprogramms unmittelbar von der menschlichen Puppe (1) aus versehen ist, die ein mechanischer Kontakt (75) ist, der beispielsweise in einem Modell (71) einer Gürtelschnalle angeordnet ist, an den Computer (9) des Steuersystem für den Ausbildungsvorgang angeschlossen ist und mit einem an der Rumpfeinheit (4) angeordneten Einschiebsel (73) des Modells der Gürtelschnalle operativ zusammenwirkt.

5. Übungsvorrichtung nach Anspruch 1,
**dadurch gekennzeichnet,**
**dass** die menschliche Puppe (1) mit einem Fühler für ein Anheben der unteren Extremitäten (6) versehen ist, der als Dauermagnet (82) und magnetbetätigter Kontakt (84) ausgebildet ist, die einander gegenüber im Bereich des beweglichen Hüftgelenks einer unteren Extremität angeordnet sind, wobei der magnetbetätigte Kontakt (84) an den Computer (9) des Steuersystems für den Ausbildungsvorgang angeschlossen ist und operativ mit dem Dauermagnet (82) zusammenwirkt.

6. Übungsvorrichtung nach Anspruch 1,
**dadurch gekennzeichnet,**
**dass** die Rumpfeinheit (4) der menschlichen Puppe (1) mit einem Fühler (65) für einen Schlag in den Zwischen-Schulterblatt-Bereich versehen ist, der im Zwischen-Schulterblatt-Bereich der menschlichen Puppe (1) angeordnet und an den Computer (9) des Steuersystems für den Ausbildungsvorgang angeschlossen ist.

7. Übungsvorrichtung nach Anspruch 6,
**dadurch gekennzeichnet,**
**dass** der Fühler (65) für den Schlag in den Zwischen-Schulterblatt-Bereich als ein Gehäuse (67) ausgebildet ist, in dem wenigstens zwei Dauermagnete (68, 69) frei angeordnet sind, während in der Wand des Gehäuses (67) mindestens ein magnetbetätigter Kontakt (70) angebracht ist, der an den Computer (9) des Steuersystems für den Ausbildungsvorgang angeschlossen ist, wobei bei dem Schlag die Dauermagnete (68, 69) mit dem magnetbetätigten Kontakt (70) operativ zusammenwirken.

8. Übungsvorrichtung nach Anspruch 1,
**dadurch gekennzeichnet,**
**dass** ein Imitator (87) der Lebensfunktion des Oberarmarterienpulsschlags und ein Imitator (88) der Lebensfunktion des Oberschenkelarterienpulsschlags mit Fühlern für ein Abdrücken dieser Arterien, kombiniert mit den Imitatoren (87, 88) dieser Pulsschläge, versehen sind.

9. Übungsvorrichtung nach Anspruch 8,
**dadurch gekennzeichnet,**
**dass** einer der Fühler (87, 88) für das Abdrücken der Oberarmund der Oberschenkelarterie als ein Gehäuse (94) ausgebildet ist, innerhalb dessen ein mechanischer Kontakt (95) am Boden befestigt ist, oberhalb dessen ein Gehäuse (89) des entsprechenden Imitators (87, 88) der Lebensfunktion des Oberarm- und Oberschenkelarterienpulsschlages beweglich angeordnet ist, wobei der mechanische Kontakt (95) an den Computer (9) des Steuersystems für den Ausbildungsvorgang angeschlossen ist und operativ mit dem Gehäuse (89) zusammenwirkt.

10. Übungsvorrichtung nach Anspruch 1,
**dadurch gekennzeichnet,**
**dass** alle in Videoimitatoren (96, 97, 98, 99) äußerer Blutungen angebrachten Fühler (77, 78, 79, 80) für die äußeren Einwirkungen des Anlegens von Immobilisierungsschienen, des Anlegens von Druckverbänden, und Fühler (104, 105) für das Anlegen einer blutstillenden Abbindung wenigstens einen mechanischen Kontakt (102) enthalten, über dem in der Hülle der Puppe (1) an den Stellen der Anordnung der Fühler (77, 78, 79, 80, 96, 97, 98, 99) durchgehende Öffnungen ausgebildet sind, in denen ein Stift (103) beweglich angebracht ist, der mit den Immobilisierungsschienen oder dem Druckverband oder der blutstillenden Abbindung und dem mechanischen Kontakt operativ zusammenwirkt.

11. Übungsvorrichtung nach Anspruch 1,
**dadurch gekennzeichnet,**
**dass** das Steuersystem für den Ausbildungsvorgang mit einem Programmmenue mit mindestens 25 anatomischen Symbolen für Erste-Hilfe-Maßnahmen versehen ist, mittels derer das Ausbildungsprogramm auswählbar ist.

## Claims

1. Training device for training first-aid measures for a person in an emergency situation, comprising a human dummy (1) with the following movably interconnected: a head unit (2), a neck unit (3) and a trunk unit (4) with upper and lower extremities (5 and 6, respectively), in which simulators of vital human functions with sensors for external effects are arranged on the said dummy, an anatomical display (7) with a set (8) of video simulators for the internal organs of a human being and for traumas to the said internal organs, and an electrical training defibrillator (106) with removable electrodes (108, 109) which are connected to a computer (9) of a control system for the training session, **characterized in that** the training device contains current paths through illuminating elements (134) replicating the internal organs of a human being and a simulator (133) for disconnection of the human being from an electrical circuit, which are connected to the computer (9) of the control system for the training session and to sensors for external effects operatively interacting with the removable electrodes (108, 109) of the training defibrillator (106), the illuminating elements (134) for the current paths through the internal organs of the human being being arranged in the anatomical display (7), while the simulator (133) for the disconnection of the human being from the electrical circuit is arranged in the human dummy (1).

2. Training device according to Claim 1, **characterized in that** the illuminating elements (134) replicating the current paths through the internal organs of the human being are combined with the set (8) of video simulators for the internal organs of the human being and arranged on a relief panel (117) of the anatomical display (7), the illuminating elements being connected in series with one another.

3. Training device according to Claim 1 or 2, **characterized in that** the simulator (133) for disconnection of the human being from an electrical circuit is formed as a mechanical contact, combined with a light indicator provided on the outer surface of the trunk unit (4) of the human dummy (1) in the region of the front wall of the thorax, and operatively interacts with the hands of the trainee.

4. Training device according to Claim 1, **characterized in that** the control system for the training session is provided with a device for the repeated starting of a chosen computer program directly from the human dummy (1), which device is a mechanical contact (75), which is arranged for example in a model (71) of a belt buckle, is connected to the computer (9) of the control system for the training session and operatively interacts with a push-in insert (73) of the model of the belt buckle arranged on the trunk unit (4).

5. Training device according to Claim 1, **characterized in that** the human dummy (1) is provided with a sensor for raising of the lower extremities (6), which is formed as a permanent magnet (82) and a magnet-actuated contact (84), which are arranged opposite one another in the region of the movable hip joint of a lower extremity, the magnet-actuated contact (84) being connected to the computer (9) of the control system for the training session and operatively interacting with the permanent magnet (82).

6. Training device according to Claim 1, **characterized in that** the rump unit (4) of the human dummy (1) is provided with a sensor (65) for a blow in the region between the shoulder blades, which is arranged in the region between the shoulder blades of the human dummy (1) and is connected to the computer (9) of the control system for the training session.

7. Training device according to Claim 6, **characterized in that** the sensor (65) for the blow in the region between the shoulder blades is formed as a housing (67), in which at least two permanent magnets (68, 69) are freely arranged, while in the wall of the housing (67) there is fitted at least one magnet-actuated contact (70), which is connected to the computer (9) of the control system for the training session, the permanent magnets (68, 69) operatively interacting with the magnet-actuated contact (70) when there is a blow.

8. Training device according to Claim 1, **characterized in that** a simulator (87) of the vital function of the upper-arm arterial pulse beat and a simulator (88) of the vital function of the upper-leg arterial pulse beat are provided with sensors for pressure-testing these arteries, combined with the simulators (87, 88) of these pulse beats.

9. Training device according to Claim 8, **characterized in that** one of the sensors (87, 88) for the pressure-testing of the upper-arm and the upper-leg arteries is formed as a housing (94), within which a mechanical contact (95) is fastened to the base, above which a housing (89) of the corresponding simulator (87, 88) of the vital function of the upper-arm and upper-leg arterial pulse beat is movably arranged, the mechanical contact (95) being connected to the computer (9) of the control system for the training session and operatively interacting with the housing (89).

10. Training device according to Claim 1, **characterized in that** all the sensors (77, 78, 79, 80) fitted in video simulators (96, 97, 98, 99) of external haemorrhages, for the external effects of the application of immobilizing splints and the application of pressure bandages, and sensors (104, 105) for the application of a ligature contain at least one mechanical contact (102), over which there are formed in the shell of the dummy (1), at the points where the sensors (77, 78, 79, 80, 96, 97, 98, 99) are arranged, through-openings in which a pin (103) which operatively interacts with the immobilizing splints or the pressure bandage or the ligature and the mechanical contact is movably fitted.

11. Training device according to Claim 1, **characterized in that** the control system for the training session is provided with a program menu with at least 25 anatomical symbols for first-aid measures, by means of which the training program can be selected.

## Revendications

1. Système d'entraînement servant à enseigner des mesures de premiers secours destinées à une personne en situation d'urgence, comprenant un mannequin humain (1) avec, reliées entre elles de manière à pouvoir bouger : une unité tête (2), une unité cou (3), une unité tronc (4) avec des extrémités supérieures et inférieures (5 ou 6) dans lesquelles sont disposés des imitateurs des fonctions vitales de la personne avec des capteurs pour les effets extérieurs sur celles-ci, un afficheur anatomique (7) avec un ensemble (8) d'imitateurs vidéo des organes internes de la personne et de leurs liaisons traumatiques et un défibrillateur d'entraînement électrique (106) muni d'électrodes (108, 109) amovibles, raccordées à un ordinateur (9) d'un système de commande pour la procédure d'enseignement, **caractérisé en ce que** le système d'entraînement comprend des éléments d'éclairage (134) simulant les trajets du courant à travers les organes internes de la personne et un imitateur (133) d'une séparation de la personne d'un circuit de courant électrique, lesquels sont raccordés à l'ordinateur (9) du système de commande pour la procédure d'enseignement et à des capteurs agissant conjointement de manière opérationnelle avec les électrodes amovibles (108, 109) du défibrillateur d'entraînement (106) pour les effets extérieurs, les éléments d'éclairage (134) étant disposés dans l'afficheur anatomique (7) pour les trajets du courant à travers les organes internes de la personne, alors que l'imitateur (133) de la séparation de la personne du circuit de courant électrique est disposé dans le mannequin humain (1).

2. Système d'entraînement selon la revendication 1, **caractérisé en ce que** les éléments d'éclairage (134) simulant les trajets du courant à travers les organes internes de la personne sont combinés avec l'ensemble (8) d'imitateurs vidéo des organes internes de la personne et sont disposés sur un panneau en relief (117) de l'afficheur anatomique (7), les éléments d'éclairage étant branchés en série entre eux.

3. Système d'entraînement selon la revendication 1 ou 2, **caractérisé en ce que** l'imitateur (133) d'une séparation de la personne d'un circuit de courant électrique est réalisé sous la forme d'un contact mécanique, combiné avec un indicateur lumineux monté sur la surface extérieure de l'unité tronc (4) du mannequin humain (1) dans la zone de la paroi avant de la cage thoracique et agit de manière opérationnelle avec les mains de la personne à former.

4. Système d'entraînement selon la revendication 1, **caractérisé en ce que** le système de commande est muni, pour la procédure d'enseignement, d'un dispositif destiné au démarrage répétitif d'un programme informatique choisi directement depuis le mannequin humain (1), lequel est un contact mécanique (75) qui est disposé, par exemple, dans un modèle (71) d'une boucle de ceinture, est raccordé à l'ordinateur (9) du système de commande pour la procédure d'enseignement et agit conjointement de manière opérationnelle avec un élément à insérer (73) du modèle de boucle de ceinture disposé sur l'unité tronc (4).

5. Système d'entraînement selon la revendication 1, **caractérisé en ce que** le mannequin humain (1) est muni d'un capteur pour un soulèvement des extrémités inférieures (6), lequel est réalisé sous la forme d'un aimant permanent (82) et d'un contact magnétisable (84) qui sont disposés à l'opposé l'un de l'autre dans la zone de l'articulation mobile de la hanche d'une extrémité inférieure, le contact magnétisable (84) étant raccordé à l'ordinateur (9) du système de commande pour la procédure d'enseignement et agissant conjointement de manière opérationnelle avec l'aimant permanent (82).

6. Système d'entraînement selon la revendication 1, **caractérisé en ce que** l'unité tronc (4) du mannequin humain (1) est muni d'un capteur (65) pour un choc dans la zone entre les omoplates, lequel est disposé dans la zone entre les omoplates du mannequin humain (1) et raccordé à l'ordinateur (9) du système de commande pour la procédure d'enseignement.

7. Système d'entraînement selon la revendication 6, **caractérisé en ce que** le capteur (65) pour un choc dans la zone entre les omoplates est réalisé sous la forme d'un boîtier (67) dans lequel sont disposés librement au moins deux aimants permanents (68, 69) alors que dans la paroi du boîtier (67) est disposé au moins un contact magnétisable (70) qui est raccordé à l'ordinateur (9) du système de commande pour la procédure d'enseignement, les aimants permanents (68, 69) agissant conjointement de manière opérationnelle avec le contact magnétisable (70) en cas de choc.

8. Système d'entraînement selon la revendication 1, **caractérisé en ce qu'**un imitateur (87) de la fonction vitale du pouls artériel du bras et un imitateur (88) de la fonction vitale du pouls artériel de la cuisse sont munis de capteurs pour une compression de ces artères combinés avec les imitateurs (87, 88) de ces pouls.

9. Système d'entraînement selon la revendication 8, **caractérisé en ce que** l'un des capteurs (87, 88) pour la compression de l'artère du bras et de la cuisse est réalisé sous la forme d'un boîtier (94) à l'intérieur duquel un contact mécanique (95) est fixé sur le fond, au-dessus duquel est disposé de manière mobile un boîtier (89) de l'imitateur (87, 88) correspondant de la fonction vitale du pouls artériel du bras et de la cuisse, le contact mécanique (95) étant raccordé à l'ordinateur (9) du système de commande pour la procédure d'enseignement et agissant conjointement de manière opérationnelle avec le boîtier (89).

10. Système d'entraînement selon la revendication 1, **caractérisé en ce que** tous les capteurs (77, 78, 79, 80) montés dans des imitateurs vidéo (96, 97, 98, 99) d'hémorragies externes pour les effets extérieurs de l'application d'attelles d'immobilisation, l'application de bandages de compression, et les capteurs (104, 105) pour l'application d'un garrot hémostatique comprennent au moins un contact mécanique (102) au-dessus duquel sont formées des ouvertures traversantes dans l'enveloppe du mannequin (1) aux points de montage des capteurs (77, 78, 79, 80, 96, 97, 98, 99), dans lesquelles est logée de manière mobile une tige (103) qui agit conjointement de manière opérationnelle avec les attelles d'immobilisation ou le bandage de compression ou le garrot hémostatique et le contact mécanique.

11. Système d'entraînement selon la revendication 1, **caractérisé en ce que** le système de commande pour la procédure d'enseignement est muni d'un menu de programme comprenant au moins 25 symboles anatomiques pour les mesures de premiers secours, à l'aide desquels peut être sélectionné le programme d'enseignement.
